# EUROPÄISCHE PATENTANMELDUNG

(11) **EP 3 865 525 A1**
(43) Veröffentlichungstag der Anmeldung: **18.08.2021**
(21) Anmeldenummer: 20157171.8
(22) Anmeldetag: 13.02.2020
(51) Int. Cl.: C08F 232/08, C08F 244/00, C08F 212/08, C08F 8/04, C09J 123/02, C09J 123/08, C09J 145/00, C08F 2/01

(54) **KOHLENWASSERSTOFFHARZ UND VERFAHREN ZU SEINER HERSTELLUNG**

(71) Anmelder: Rain Carbon Germany GmbH, 44579 Castrop-Rauxel (DE)
(72) Erfinder: NAU, Manuel, 45721 Haltern am See (DE); DREISEWERD, Björn, 44359 Dortmund (DE); LIU, Jun, 40217 Düsseldorf (DE); FUHRMANN, Edgar, 44579 Castrop-Rauxel (DE); HEITMANN, Matthias, 40225 Düsseldorf (DE)
(74) Vertreter: Cohausz & Florack

(57) **Zusammenfassung**

Dargestellt und beschrieben wird ein Kohlenwasserstoffharz erhältlich durch thermische Polymerisation einer cyclischen Diolefinkomponente enthaltend eine cyclische Diolefinverbindung mit einer Aromatenkomponente enthaltend Inden und/oder C₁₋₄-Alkylinden, wobei das Kohlenwasserstoffharz einen Polydispersitätsindex (PDI) von 1 bis kleiner 2,3 aufweist. Ferner beschrieben wird ein Herstellungsverfahren für das Kohlenwasserstoffharz, in dem man eine Monomermischung, die eine Aromatenkomponente enthaltend Inden und/oder C₁₋₄-Alkylinden und eine cyclische Diolefinkomponente enthaltend eine cyclische Diolefinverbindung enthält, durch Erwärmen auf eine Polymerisationstemperatur von mindestens 180°C zur Polymerisation bringt, um einen Produktstrom enthaltend Kohlenwasserstoffharz zu erhalten, wobei Oligomere, die von der cyclischen Diolefinverbindung stammende Einheiten und/oder von der Aromatenkomponente stammende Einheiten enthalten, vom Produktstrom abgetrennt und der Monomermischung wieder zugeführt werden. Schließlich werden ein hydriertes Kohlenwasserstoffharz, ein Verfahren zu dessen Herstellung sowie die Verwendung des Kohlenwasserstoffharzes und des hydrierten Kohlenwasserstoffharzes beschrieben.

## Beschreibung

### TECHNISCHES GEBIET DER ERFINDUNG

Die Erfindung betrifft ein Kohlenwasserstoffharz, ein Verfahren zu seiner Herstellung aus einer cyclischen Diolefinkomponente enthaltend eine cyclische Diolefinverbindung und einer Aromatenkomponente enthaltend Inden und/oder C₁₋₄-Alkylinden, dessen Hydrierung sowie ein hydriertes Kohlenwasserstoffharz.

### TECHNISCHER HINTERGRUND DER ERFINDUNG

Kohlenwasserstoffharze werden häufig als Klebrigmacher in Heißklebern verwendet. Klebrigmacher werden üblicherweise auch als Tackifier bezeichnet. Heißkleber weisen ein Basispolymer auf, das die Eigenschaften des Heißklebers im Wesentlichen bestimmt. Als Basispolymere kommen in Heißklebern neben Styrol-Blockcopolymeren (SBC), Polyamid, Polyurethan und Polyester häufig Metallocenpolyolefine (mPO), amorphe Polyalphaolefine (APAO) oder Ethylenvinylacetat-Copolymere (EVAC) zum Einsatz.

Von besonderem Interesse sind möglichst helle Heißkleber mit guten Verarbeitungseigenschaften. Wesentlich für gute Verarbeitungseigenschaften des Heißklebers sind eine definierte Verträglichkeit von Klebrigmacher und Basispolymer. Die eingesetzten Klebrigmacher sind normalerweise nur mit einer Basispolymerklasse wie mPO, APAO oder EVAC gut verträglich, so dass für jede Basispolymerklasse ein eigener Klebrigmacher benötigt wird, wenn gute Verträglichkeit gewünscht ist. Vorteilhaft wäre aber, wenn der Klebrigmacher mit möglichst vielen Basispolymerklassen verträglich wäre. Die Verträglichkeit der Komponenten des Heißklebers kann beispielsweise durch die Ermittlung des Trübungspunkts beurteilt werden.

Zur Herstellung möglichst heller und gut verarbeitbarer Heißkleber ist es wichtig, dass die dafür verwendeten zumindest teilweise hydrierten Kohlenwasserstoffharze möglichst frei von unerwünschten Nebenprodukten sind. Diese können zu dunklen Verfärbungen im Kohlenwasserstoffharz und Unverträglichkeiten mit anderen Bestandteilen eines Heißklebers führen. Zur Beurteilung von Verfärbungen wird häufig die Gardner-Farbzahl, Yellowness Index oder die Hazen-Farbzahl verwendet.

Verfahren zur Herstellung von (hydrierten) Kohlenwasserstoffharzen sind bekannt. Beispielsweise werden in diesen Verfahren ein Cycloalken mit zwei konjugierten Doppelbindungen wie Cyclopentadien und eine ethylenisch ungesättigte aromatische Komponente wie Styrol copolymerisiert und das erhaltene Kohlenwasserstoffharz in einem weiteren Schritt zumindest teilweise hydriert. Das so erhaltene Kohlenwasserstoffharz kann allein oder gemeinsam mit weiteren Zusätzen als Klebrigmacher für Heißkleber verwendet werden.

Ein derartiges Verfahren ist in der US 5 502 140 A beschrieben, worin besonders preiswerte dicyclopentadienhaltige Ausgangsmaterialien verwendet werden. Die US 5 502 140 A verwendet jedoch kein Inden sondern Vinylaromaten wie Styrol oder α-Methylstyrol in der Reaktion.

Die EP 2 251 364 B1 beschreibt ein Verfahren zur Herstellung von Kohlenwasserstoffharzen der eingangs beschriebenen Art, die einen Gehalt an aromatischen Verbindungen von 5 bis 25 Gew.-% aufweisen. Auch in der EP 2 251 364 B1 werden qualitativ hochwertige Harze nur durch den Einsatz eines reinen Vinylaromaten wie Styrol als ethylenisch ungesättigte aromatische Komponente erreicht.

Die EP 0 936 229 B1 beschreibt ein Verfahren zur Herstellung eines aromatisch modifizierten aliphatischen Kohlenwasserstoffharzes, worin Polymerisationseinspeisungen, die Olefine, aromatische Monomere und (Di)cyclodiolefine umfassen, einer Friedel-Crafts-Polymerisation unterzogen werden. Nachteilig an dem Verfahren der EP 0 936 229 B1 ist aber die Anwendung von halogenhaltigen Katalysatoren, für die Herstellung von Kohlenwasserstoffharzen.

Nebenprodukte können bei der Herstellung der Kohlenwasserstoffharze an verschiedenen Stellen aus unterschiedlichen Ursachen entstehen. Beispielsweise können sich bei der Polymerisation neben dem erwünschten Kohlenwasserstoffharz auch niedermolekulare wachsartige oder hochmolekulare Duromer-artige Nebenprodukte bilden, die die Qualität des Endprodukts beeinträchtigen und zu einer Unverträglichkeit im Heißkleber beitragen können.

Auch bei der Aufreinigung und/oder bei der Isolierung von Zwischenprodukten oder bei der Isolierung des Endprodukts können sich nachteilige Nebenprodukte bilden. So werden sowohl die Polymerisation als auch die Hydrierung normalerweise in Gegenwart unterschiedlicher inerter Lösemittel durchgeführt, so dass sowohl nach der Polymerisation als auch nach der Hydrierung teils beträchtliche Mengen an Lösemittel entfernt werden müssen. Das Entfernen der oft hochsiedenden Lösemittel erfordert meist das Erwärmen auf hohe Temperaturen, wobei Nebenprodukte durch Nachreaktionen entstehen können.

Zur Vermeidung von Nebenprodukten sind verschiedene Lösungen vorgeschlagen worden. So beschreibt die EP 3 124 503 A1 ein Verfahren zur Herstellung von Kohlenwasserstoffharzen, in dem zur Verbesserung der Verträglichkeit bei vertretbarer Kostensteigerung in einer Vorreaktion Dicyclopentadien mit einer vinylaromatischen Verbindung zu einem Phenylnorbornenderivat umgesetzt wird, das in der folgenden Polymerisationsreaktion als Starter dient. Das so erhaltene Kohlenwasserstoffharz wird anschließend hydriert. Nachteilig an diesem Verfahren ist, dass es mit der Vorreaktion einen zusätzlichen Schritt enthält, in dem zudem die Temperatur in einem engen Fenster gehalten werden muss, um das Phenylnorbornenderivat mit hoher Selektivität zu erhalten.

### ZUSAMMENFASSUNG DER ERFINDUNG

Der Erfindung liegt folglich die Aufgabe zugrunde, möglichst helle Kohlenwasserstoffharze bereitzustellen. Eine weitere Aufgabe der Erfindung besteht darin, Kohlenwasserstoffe bereitzustellen, die eine gute Verträglichkeit mit Basispolymeren, insbesondere mit Metallocenpolyolefinen (mPO), amorphen Polyalphaolefinen (APAO) und/oder Ethylenvinylacetat-Copolymeren (EVAC), dabei insbesondere mit Metallocenpolyolefinen (mPO), amorphen Polyalphaolefinen (APAO) und Ethylenvinylacetat-Copolymeren (EVAC), von Heißklebern aufweisen und somit als Tackifier dienen. Ferner hat die Erfindung die Aufgabe, ein Verfahren bereitzustellen, mit dem Kohlenwasserstoffharze, die die vorstehend genannte Verträglichkeit aufweisen, hergestellt werden können.

Gelöst wird diese Aufgabe durch ein Kohlenwasserstoffharz erhältlich durch thermische Polymerisation einer cyclischen Diolefinkomponente enthaltend eine cyclische Diolefinverbindung mit einer Aromatenkomponente enthaltend Inden und/oder C₁₋₄-Alkylinden, wobei das Kohlenwasserstoffharz einen Polydispersitätsindex (PDI) von 1 bis kleiner 2,3 aufweist.

Gegenstand der Erfindung ist ferner ein Verfahren zur Herstellung des erfindungsgemäßen Kohlenwasserstoffharzes, in dem man eine Monomermischung, die eine Aromatenkomponente enthaltend Inden und/oder C₁₋₄-Alkylinden und eine cyclische Diolefinkomponente enthaltend eine cyclische Diolefinverbindung enthält, durch Erwärmen auf eine Polymerisationstemperatur von mindestens 180°C zur Polymerisation bringt, um einen Produktstrom enthaltend Kohlenwasserstoffharz zu erhalten, wobei Oligomere, die von der cyclischen Diolefinverbindung stammende Einheiten und/oder von der Aromatenkomponente stammende Einheiten enthalten, vom Produktstrom abgetrennt und der Monomermischung wieder zugeführt werden.

Gegenstand der Erfindung ist auch ein hydriertes Kohlenwasserstoffharz erhältlich durch Hydrierung des erfindungsgemäßen Kohlenwasserstoffharzes und/oder durch das erfindungsgemäße Herstellungsverfahren.

Gegenstand der Erfindung ist ferner eine Zusammensetzung enthaltend
- ein erfindungsgemäßes Kohlenwasserstoffharz oder ein erfindungsgemäßes hydriertes Kohlenwasserstoffharz, und
- ein Klebstoffbasispolymer, beispielsweise ein Metallocenpolyolefin oder ein Ethylenvinylacetat-Copolymer oder ein amorphes Polyalphaolefin oder ein Styrol-Blockcopolymer.

Gegenstand der Erfindung ist auch die Verwendung eines erfindungsgemäßen Kohlenwasserstoffharzes oder eines erfindungsgemäßen hydrierten Kohlenwasserstoffharzes als Klebrigmacher oder Tackifier in Heißklebern, insbesondere in Heißklebern basierend auf Metallocenpolyolefin, Ethylenvinylacetat-Copolymer, amorphen Polyalphaolefinen oder Styrol-Block-Copolymeren, und/oder in lösemittelhaltigen Klebstoffen, insbesondere in lösemittelhaltigen Styrol-BlockCopolymer Klebstoffen.

Gegenstand der Erfindung ist ferner die Verwendung eines erfindungsgemäßen Kohlenwasserstoffharzes als Modifikationsmittel in Kautschukprodukten, insbesondere zur Verbesserung der mechanischen und dynamischen Eigenschaften in Kautschukprodukten, in Bitumen, insbesondere als Additiv und/oder als Hydrophobiermittel in Bitumen, insbesondere für Asphalt, oder als Modifizierungs- und/oder Hydrophobierungsmittel in Druckfarben.

Gegenstand der Erfindung ist schließlich die Verwendung eines erfindungsgemäßen hydrierten Kohlenwasserstoffharzes als Additiv in Lack, in Plastik, insbesondere als Modifikationsmittel in Plastik, in Gummi, in Bitumen, insbesondere als Hydrophobiermittel in Bitumen, beispielsweise für Dachbahnen, in Polypropylenfolien, insbesondere als Modifizierungs- und/oder Hydrophobiermittel in Polypropylenfolien, insbesondere BOPP-Folien, in Kosmetika oder als Klebrigmacher in Kleberzusammensetzungen, insbesondere für Applikationen in der Hygieneartikelindustrie sowie für den Einsatz in Nahrungsmittelverpackungen.

Überraschenderweise wurde gefunden, dass ein Kohlenwasserstoffharz mit einem PDI von 1 bis kleiner 2,3, das durch thermische Polymerisation einer cyclischen Diolefinkomponente mit einer Inden- und/oder C₁₋₄-Alkylinden-haltigen Komponente erhalten wird, hervorragende Eigenschaften, insbesondere eine gute Hydrierbarkeit und/oder nur geringe Verfärbungen, aufweist. Ferner kann durch Hydrierung dieses Harzes ein hydriertes Harz erhalten werden, das sehr geringe Farbzahlen aufweist und gute Verträglichkeiten mit mPO und APAO, oder bevorzugterweise sogar mit mPO, APAO und EVAC aufweist.

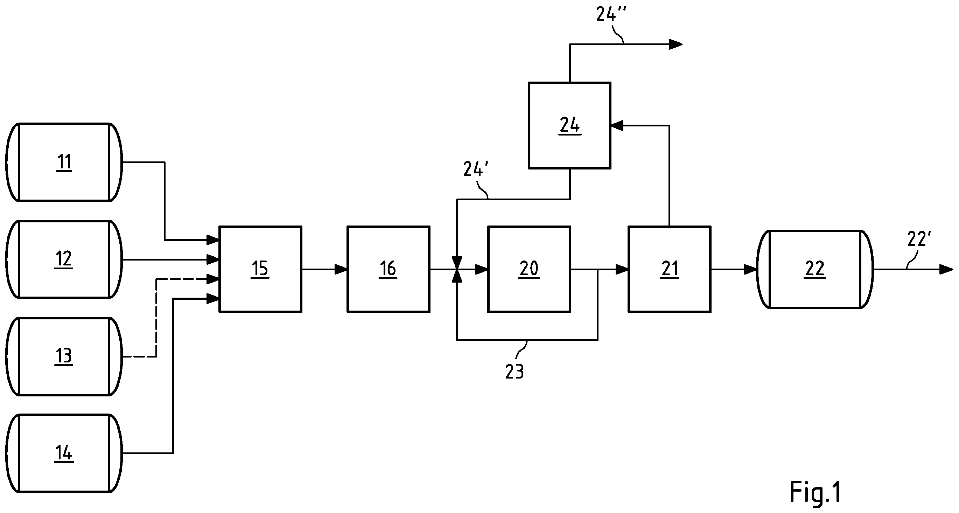

- Fig. 1: zeigt eine schematische Darstellung des erfindungsgemäßen Verfahrens.

### BEVORZUGTE AUSFÜHRUNGFORMEN DER ERFINDUNG

Nachfolgend werden zunächst das erfindungsgemäße Verfahren zur Herstellung von Kohlenwasserstoffharzen sowie eine mögliche anschließende Hydrierung beschrieben.

Vorzugsweise ist im erfindungsgemäßen Verfahren die Monomermischung während des Erwärmens auf eine Polymerisationstemperatur von mindestens 180°C und während der Polymerisation im Wesentlichen einphasig flüssig. Dadurch werden eine gute Durchmischung, eine kürzere Reaktionszeit sowie ein guter Wärmetransfer innerhalb der Mischung erreicht.

Die cyclische Diolefinkomponente enthält eine cyclische Diolefinverbindung. Vorzugsweise enthält die cyclische Diolefinkomponente 25 Gew.-% oder mehr, 30 Gew.-% oder mehr, bevorzugt 35 Gew.-% oder mehr, weiter bevorzugt 50 Gew.-% oder mehr, noch weiter bevorzugt 60 Gew.-% oder mehr, noch weiter bevorzugt 70 Gew.-% oder mehr, bezogen auf die Gesamtmasse der cyclischen Diolefinkomponente, der cyclischen Diolefinverbindung.

Die cyclische Diolefinkomponente kann auch aus der cyclischen Diolefinverbindung bestehen.

Die cyclische Diolefinverbindung enthält vorzugsweise ein Cycloalken mit mindestens zwei Kohlenstoff-Kohlenstoff-Doppelbindungen, die insbesondere konjugiert sein können. Weiter bevorzugt besteht die cyclische Diolefinverbindung aus einem oder mehreren Cycloalkenen mit mindestens zwei Kohlenstoff-Kohlenstoff-Doppelbindungen, die insbesondere konjugiert sein können.

Ein Cycloalken mit mindestens zwei Kohlenstoff-Kohlenstoff-Doppelbindungen wird erfindungsgemäß als Cyclodialken bezeichnet. Ein Cyclodialken, in dem die beiden Kohlenstoff-Kohlenstoff-Doppelbindungen konjugiert sind, wird erfindungsgemäß als konjugiertes Cyclodialken bezeichnet.

Cyclodialkene, insbesondere konjugierte Cyclodialkene, weisen vorzugsweise als Monomer 5 bis 11, insbesondere 5 bis 7, Kohlenstoffatome auf. Beispiele für konjugierte Cyclodialkene sind Cyclopentadien, Cyclopentadienderivate wie Methylcyclopentadien, Ethylcyclopentadien, Pentamethylcyclopentadien und Ethyltetramethylcyclopentadien.

Cyclodialkene, insbesondere konjugierte Cyclodialkene können dimerisieren. Cyclodialkene, insbesondere konjugierte Cyclodialkene können als Monomer, als Dimer oder als Gemisch von Monomer und Dimer vorliegen. Die Dimerisierung ist vorzugsweise reversibel. Beispielsweise neigen Cyclopentadien und Cyclopentadienderivate bei Raumtemperatur zur spontanen Dimerisierung, wobei sich beim Erhitzen in der Rückreaktion wieder die Monomere bilden. Enthält die cyclische Diolefinverbindung eine Mischung von verschiedenen Cyclodialkenen, insbesondere konjugierten Cyclodialkenen, können Monomere, Dimere und/oder Codimere vorliegen.

Die vorgenannten Beispiele für konjugierte Cyclodialkene können dementsprechend in Abhängigkeit von der Temperatur als Monomere, als Dimere oder als Gemisch von Monomeren und Dimeren vorliegen. In Mischungen von verschiedenen konjugierten Cyclodialkenen können neben Monomeren und Dimeren auch Codimere vorliegen. Beispielsweise können in Mischungen von Cyclopentadien und Methylcyclopentadien die beiden Monomere, Cyclopentadien-Cyclopentadien-Dimere, Methylcyclopentadien-Methylcyclopentadien-Dimere und Cyclopentadien-Methylcyclopentadien-Codimere vorliegen.

Gemäß einer Ausführungsform ist die cyclische Diolefinverbindung ausgewählt aus der Gruppe bestehend aus Cyclopentadien, Cyclopentadienderivate wie Methylcyclopentadien, Ethylcyclopentadien, Pentamethylcyclopentadien, Ethyltetramethylcyclopentadien und Mischungen davon.

Gemäß einer weiteren Ausführungsform enthält die cyclische Diolefinverbindung Cyclopentadien und Methylcyclopentadien.

Gemäß einer weiteren Ausführungsform besteht die cyclische Diolefinkomponente aus der cyclischen Diolefinverbindung, und die cyclische Diolefinverbindung ist ausgewählt aus der Gruppe bestehend aus Cyclopentadien, Cyclopentadienderivate wie Methylcyclopentadien, Ethylcyclopentadien, Pentamethylcyclopentadien, Ethyltetramethylcyclopentadien und Mischungen davon.

Gemäß einer weiteren Ausführungsform besteht die cyclische Diolefinkomponente aus der cyclischen Diolefinverbindung, und die cyclische Diolefinverbindung besteht aus einem konjugierten Cyclodialken ausgewählt aus der Gruppe bestehend aus Cyclopentadien, Methylcyclopentadien, Ethylcyclopentadien, Pentamethylcyclopentadien, und Ethyltetramethylcyclopentadien.

Gemäß einer Ausführungsform wird im erfindungsgemäßen Verfahren als cyclische Diolefinkomponente ein Kohlenwasserstoffgemisch, beispielsweise eine Petroleumfraktion, mit einem Gehalt an konjugierten Cyclodialkenen als cyclischer Diolefinverbindung von mindestens 25 Gew.-%, insbesondere von 30 bis 60 Gew.-%, bezogen auf die Masse des Kohlenwasserstoffgemischs, eingesetzt. Das Kohlenwasserstoffgemisch kann auch aromatische Verbindungen, beispielsweise Inden, C₁₋₄-Alkylinden und/oder ethylenisch ungesättigte aromatische Verbindungen mit jeweils unabhängig voneinander 8 bis 15, vorzugsweise 8 bis 13, Kohlenstoffatomen enthalten, vorzugsweise in einer Menge von 10 bis 20 Gew.-%, bezogen auf die Masse des Kohlenwasserstoffgemischs. Das Kohlenwasserstoffgemisch kann ferner 20 bis 40 Gew.-% nicht reaktive Komponenten enthalten, bezogen auf die Masse des Kohlenwasserstoffgemischs.

Die Monomermischung enthält ferner eine Aromatenkomponente enthaltend Inden und/oder C₁₋₄-Alkylinden. C₁₋₄-Alkylinden bedeutet bevorzugt ein- oder mehrfach, insbesondere ein- oder zweifach, C₁₋₄-Alkyl-substituiertes Inden. Beispiele für C₁₋₄-Alkylinden sind Methylinden, Dimethylinden und Ethylinden. Ein wichtiges Beispiel für C₁₋₄-Alkylinden ist Methylinden. Methylinden schließt dabei alle Isomere von Methylinden ein. Beispiele für Isomere von Methylinden sind 1-Methylinden und 3-Methylinden. Es können auch verschiedene Methylindenisomere gleichzeitig in der Aromatenkomponente vorhanden sein.

Die Aromatenkomponente kann aus Inden und/oder C₁₋₄-Alkylinden bestehen. Die Aromatenkomponente kann auch ein Aromatengemisch sein, das Inden und/oder C₁₋₄-Alkylinden und mindestens eine, insbesondere mindestens zwei, ethylenisch ungesättigte aromatische Verbindungen mit jeweils unabhängig voneinander 8 bis 15, vorzugsweise 8 bis 13, Kohlenstoffatomen enthält.

Gemäß einer bevorzugten Ausführungsform wird eine Petroleumfraktion oder ein Bestandteil aus der Teeraufbereitung enthaltend mindestens 25 Gew.-% an Inden und/oder C₁₋₄-Alkylinden und verschiedenen ethylenisch ungesättigten aromatischen Verbindungen, bezogen auf die Gesamtmasse der Petroleumfraktion oder auf die Gesamtmasse der Fraktion aus der Teeraufbereitung, als Aromatenkomponente eingesetzt.

Als ethylenisch ungesättigte aromatische Verbindungen mit 8 bis 15, vorzugsweise 8 bis 13, Kohlenstoffatomen kommen insbesondere ein oder mehrfach C₁-C₄-Alkyl-substituierte Benzolverbindungen mit einer Kohlenstoff-Kohlenstoff-Doppelbindung außerhalb des aromatischen Rings in Frage. Beispiele für solche ethylenisch ungesättigten aromatischen Verbindungen sind Styrol, α-Methylstyrol, *o*-Vinyltoluol, *m*-Vinyltoluol, und/oder *p*-Vinyltoluol. Die ethylenisch ungesättigten aromatischen Verbindungen werden häufig als Vinylaromaten bezeichnet.

Entsprechend enthält das Aromatengemisch gemäß einer Ausführungsform Inden und/oder Methylinden und mindestens zwei Vinylaromaten ausgewählt aus der Gruppe bestehend aus Styrol, α-Methylstyrol, *o*-Vinyltoluol, *m*-Vinyltoluol, *p*-Vinyltoluol oder besteht daraus.

Als Aromatengemisch wird gemäß einer Ausführungsform ein Gemisch enthaltend 50 Gew.-% oder weniger Vinylaromaten wie Styrol, α-Methylstyrol, *o*-Vinyltoluol, *m*-Vinyltoluol und *p*-Vinyltoluol, 30 Gew.-% oder weniger Inden und 15 Gew.-% oder weniger C₁₋₄-Alkylinden, bezogen auf die Gesamtmasse des Gemischs, eingesetzt.

Gemäß einer weiteren Ausführungsform wird als Aromatengemisch ein Gemisch enthaltend 60 Gew.-% oder weniger Inden und/oder C₁₋₄-Alkylinden, bezogen auf die Gesamtmasse des Gemischs, eingesetzt.

Die cyclische Diolefinverbindung und Inden und/oder C₁₋₄-Alkylinden oder das Aromatengemisch sind vorzugsweise die Monomere der Monomermischung oder stellen diese bereit.

Die cyclische Diolefinkomponente und die Aromatenkomponente können in unterschiedlichen Verhältnissen in der Monomermischung vorhanden sein. Es wurde aber gefunden, dass sich bessere Ergebnisse einstellen, wenn die Verhältnisse von cyclischer Diolefinkomponente und Aromatenkomponente so eingestellt werden, dass die cyclische Diolefinverbindung und Inden und/oder C₁₋₄-Alkylinden und die ethylenisch ungesättigten aromatischen Verbindungen in bestimmten Verhältnissen vorliegen.

Vorteilhafterweise sind die cyclische Diolefinverbindung und die Aromatenkomponente wie vorstehend definiert, und die Monomermischung enthält 50 bis 95 Gew.-%, vorzugsweise 60 bis 95 Gew.-%, oder 65 bis 90 Gew.-% oder 65 bis 85 Gew.-% oder 65 bis 80 Gew.-% der cyclischen Diolefinverbindung, bezogen auf die Gesamtmasse aus cyclischen Diolefinverbindungen, Inden und/oder C₁₋₄-Alkylinden und ethylenisch ungesättigten aromatischen Verbindungen.

Gemäß einer bevorzugten Ausführungsform ist die cyclische Diolefinverbindung ausgewählt aus der Gruppe bestehend aus Cyclopentadien, Cyclopentadienderivate wie Methylcyclopentadien, Ethylcyclopentadien, Pentamethylcyclopentadien, Ethyltetramethylcyclopentadien und Mischungen davon, und die Aromatenkomponente ist ein Aromatengemisch, das Inden und/oder C₁₋₄-Alkylinden und mindestens eine, insbesondere mindestens zwei, ethylenisch ungesättigte aromatische Verbindungen mit jeweils unabhängig voneinander 8 bis 15, vorzugsweise 8 bis 13, Kohlenstoffatomen enthält, und die Monomermischung enthält 50 bis 95 Gew.-%, vorzugsweise 60 bis 95 Gew.-%, oder 65 bis 90 Gew.-% oder 65 bis 85 Gew.-% oder 65 bis 80 Gew.-% der cyclischen Diolefinverbindung, bezogen auf die Gesamtmasse der cyclischen Diolefinverbindung, Inden und/oder C₁₋₄-Alkylinden und ethylenisch ungesättigten aromatischen Verbindungen.

Gemäß einer weiteren bevorzugten Ausführungsform ist die cyclische Diolefinverbindung ausgewählt aus der Gruppe bestehend aus Cyclopentadien, Cyclopentadienderivate wie Methylcyclopentadien, Ethylcyclopentadien, Pentamethylcyclopentadien, Ethyltetramethylcyclopentadien und Mischungen davon, und die Aromatenkomponente ist ein Aromatengemisch, wobei das Aromatengemisch ein Gemisch enthaltend 50 Gew.-% oder weniger Vinylaromaten wie Styrol, α-Methylstyrol, *o*-Vinyltoluol, *m*-Vinyltoluol und *p*-Vinyltoluol, 25 Gew.-% oder weniger Inden und 10 Gew.-% oder weniger C₁₋₄-Alkylinden ist, bezogen auf die Gesamtmasse des Gemischs, oder ein Gemisch enthaltend 60 Gew.-% oder weniger Inden und/oder C₁₋₄-Alkylinden, bezogen auf die Gesamtmasse des Gemischs, ist, und die Monomermischung enthält 50 bis 95 Gew.-%, vorzugsweise 60 bis 95 Gew.-%, oder 65 bis 90 Gew.-% oder 65 bis 85 Gew.-% oder 65 bis 80 Gew.-% der cyclischen Diolefinverbindung, bezogen auf die Gesamtmasse der cyclischen Diolefinverbindung, Inden und/oder C₁₋₄-Alkylinden und ethylenisch ungesättigten aromatischen Verbindungen.

Vorteilhafterweise sind die cyclische Diolefinverbindung und die Aromatenkomponente wie vorstehend definiert, und die Monomermischung enthält 5 bis 40 Gew.-%, vorzugsweise 10 bis 35 Gew.-% oder 15 bis 35 Gew.-% oder 25 bis 35 Gew.-% an Inden und/oder C₁₋₄-Alkylinden und ethylenisch ungesättigten aromatischen Verbindungen, bezogen auf die Gesamtmasse der cyclischen Diolefinverbindung, Inden und/oder C₁₋₄-Alkylinden und ethylenisch ungesättigten aromatischen Verbindungen.

Gemäß einer Ausführungsform ist die cyclische Diolefinverbindung ausgewählt aus der Gruppe bestehend aus Cyclopentadien, Cyclopentadienderivate wie Methylcyclopentadien, Ethylcyclopentadien, Pentamethylcyclopentadien, Ethyltetramethylcyclopentadien und Mischungen davon, und die Aromatenkomponente ist ein Aromatengemisch, das Inden und/oder C₁₋₄-Alkylinden und mindestens eine, insbesondere mindestens zwei, ethylenisch ungesättigte aromatische Verbindungen mit jeweils unabhängig voneinander 8 bis 15, vorzugsweise 8 bis 13, Kohlenstoffatomen enthält, und die Monomermischung enthält 5 bis 40 Gew.-%, vorzugsweise 10 bis 35 Gew.-% oder 15 bis 35 Gew.-% oder 25 bis 35 Gew.-% an ethylenisch ungesättigten aromatischen Verbindungen, bezogen auf die Gesamtmasse der cyclischen Diolefinverbindung, Inden und/oder C₁₋₄-Alkylinden und ethylenisch ungesättigten aromatischen Verbindungen.

Gemäß einer weiteren Ausführungsform ist die cyclische Diolefinverbindung ausgewählt aus der Gruppe bestehend aus Cyclopentadien, Cyclopentadienderivate wie Methylcyclopentadien, Ethylcyclopentadien, Pentamethylcyclopentadien, Ethyltetramethylcyclopentadiendimere und Mischungen davon und die Aromatenkomponente ist ein Aromatengemisch, wobei das Aromatengemisch ein Gemisch enthaltend 50 Gew.-% oder weniger Vinylaromaten wie Styrol, α-Methylstyrol, *o*-Vinyltoluol, *m*-Vinyltoluol und *p*-Vinyltoluol, 30 Gew.-% oder weniger Inden und 15 Gew.-% oder weniger C₁₋₄-Alkylinden ist, bezogen auf die Gesamtmasse des Gemischs, oder ein Gemisch enthaltend 60 Gew.-% oder weniger Inden und/oder C₁₋₄-Alkylinden, bezogen auf die Gesamtmasse des Gemischs, ist, und die Monomermischung enthält 5 bis 40 Gew.-%, vorzugsweise 10 bis 35 Gew.-% oder 15 bis 35 Gew.-% oder 25 bis 35 Gew.-% an Inden und/oder C₁₋₄-Alkylinden und ethylenisch ungesättigten aromatischen Verbindungen, bezogen auf die Gesamtmasse der cyclischen Diolefinverbindung, Inden und/oder C₁₋₄-Alkylinden und ethylenisch ungesättigten aromatischen Verbindungen.

Wird als cyclische Diolefinkomponente ein Gemisch mit einem niedrigen Gehalt an cyclischer Diolefinverbindung eingesetzt, beispielsweise eine Petroleumfraktion, kann zusätzlich eine cyclische Diolefinverbindung bestehend aus einer oder mehreren konjugierten Cyclodialkenen, beispielsweise Cyclopentadien, Methylcyclopentadien, Pentamethylcyclopentadien, Ethylcyclopentadien und Ethyltetramethylcyclopentadien, zugesetzt werden, um die voranstehend angegebenen Monomerverhältnisse einzustellen. Entsprechendes gilt für die Aromatenkomponente und Inden und/oder C₁₋₄-Alkylinden und die ethylenisch ungesättigten aromatischen Verbindungen mit 8 bis 15, vorzugsweise 8 bis 13, Kohlenstoffatomen.

Die Monomermischung kann ein nicht polymerisierbares Lösemittel enthalten. Geeignete Lösemittel sind aromatische und naphthenische Lösemittel oder deren Hydrierungsprodukte. Geeignete Lösemittel sind folglich beispielsweise Benzol, Toluol, Xylol, Ethylbenzol, Cyclohexan, Dimethylcyclohexan, Ethylcyclohexan oder deren Gemische. Vorzugsweise kann das Lösemittel ein- oder mehrfach, insbesondere ein- oder zweifach, Alkyl-substituierte aromatische Verbindungen mit 7 bis 10 Kohlenstoffatomen enthalten, beispielsweise *o*-Xylol, *m*-Xylol, *p*-Xylol und/oder Ethylbenzol. Diese haben vorzugsweise einen Siedepunkt von über 100°C, insbesondere über 130°C. Wird Xylol als Lösemittel eingesetzt, kann dieses als reine Verbindung oder als Gemisch von zwei oder mehreren der Isomeren *o*-Xylol, *m*-Xylol und *p*-Xylol vorliegen.

Gemäß einer bevorzugten Ausführungsform kann ein Cs-Isomerengemisch als Lösemittel eingesetzt werden. Das Cs-Isomerengemisch umfasst vorzugsweise ein Gemisch aus *o*-Xylol, *m*-Xylol, *p*-Xylol und Ethylbenzol.

Petroleumfraktionen und Bestandteile aus der Teerdestillation können bereits nicht polymerisierbare Bestandteile, beispielsweise nicht polymerisierbare Aromaten wie Xylole, enthalten. Somit kann auf die Zugabe eines Lösemittels verzichtet werden, wenn als cyclische Diolefinkomponente eine Petroleumfraktion eingesetzt wird und/oder als Aromatenkomponente eine Petroleumfraktion oder ein Bestandteil aus der Teerdestillation eingesetzt wird.

Die Monomermischung kann nicht polymerisierbare Bestandteile in einer Menge von 0 bis 40 Gew.-% enthalten. Dabei kann das nicht polymerisierbare Lösemittel in einer Menge von 0 bis 40 Gew.-%, bezogen auf die Masse der Monomermischung, in der Monomermischung enthalten sein. Vorzugsweise enthält die Monomermischung 5 bis 35 Gew.-%, besonders bevorzugt 5 bis 30 Gew.-%, beispielsweise etwa 30 Gew.-%, nicht polymerisierbares Lösemittel, jeweils bezogen auf die Masse der Monomermischung.

Denkbar ist auch, dass die Monomermischung nicht polymerisierbares Lösemittel und nicht polymerisierbare Bestandteile zusammen in einer Menge von 0 bis 40 Gew.-%, bevorzugt 5 bis 35 Gew.-%, weiter bevorzugt 5 bis 30 Gew.-%, beispielsweise etwa 30 Gew.-%, bezogen auf die Masse der Monomermischung, enthält. Denkbar ist schließlich, dass die Monomermischung nicht polymerisierbare Bestandteile in einer Menge von 0 bis 40 Gew.-%, bevorzugt 5 bis 35 Gew.-%, weiter bevorzugt 5 bis 30 Gew.-%, beispielsweise etwa 30 Gew.-%, bezogen auf die Masse der Monomermischung, enthält.

Gemäß einer Ausführungsform wird das Verfahren im Wesentlichen unter Ausschluss von Sauerstoff durchgeführt. Dadurch kann die Bildung von Nebenprodukten reduziert werden. Insbesondere kann die Bildung von Säure- und Estergruppen im Produkt vermieden werden. Dies hilft beim Erreichen von möglichst farblosen hydrierten Kohlenwasserstoffharzen. Vorzugsweise werden die cyclischen Diolefinkomponenten und/oder die Aromatenkomponenten oder das Aromatengemisch, insbesondere deren Lagerbehälter, mit einem Schutzgas wie Stickstoff inertisiert. Vorteilhafterweise werden auch das Kohlenwasserstoffharz und/oder das hydrierte Kohlenwasserstoffharz, insbesondere die Lagerbehälter für das Kohlenwasserstoffharz und/oder für das hydrierte Kohlenwasserstoffharz, mit einem Schutzgas wie Stickstoff inertisiert.

Im erfindungsgemäßen Verfahren kann die Monomermischung schnell auf die Polymerisationstemperatur aufgeheizt werden. Vorzugsweise erfolgt das Aufheizen der Monomermischung bei einer Geschwindigkeit von 20°C/Minute bis 200°C/Minute, bevorzugt 30°C/Minute bis 200°C/Minute, weiter bevorzugt 35°C/Minute bis 200°C/Minute, noch weiter bevorzugt 35°C/Minute bis 140°C/Minute, besonders bevorzugt 35°C/Minute bis 80°C/Minute oder 35°C/Minute bis 70°C/Minute. Insbesondere werden die vorgenannten Aufheizgeschwindigkeiten beim Aufheizen der Monomermischung auf die Temperatur, bei der die Polymerisationsreaktion beginnt einzusetzen, insbesondere bis zu einer Temperatur von 180°C bis 235°C, eingesetzt. Sobald die Monomermischung eine Temperatur oberhalb von 180°C oder mehr erreicht hat, können nachfolgende Temperaturen auch mit anderen als den vorgenannten Aufheizgeschwindigkeiten eingestellt werden. Es wurde festgestellt, dass bei den erfindungsgemäßen Aufheizgeschwindigkeiten die Menge an Nebenprodukten gering ist und bei einem vorgegebenen Erweichungspunkt niedrige Mz Werte erreicht werden können.

Obwohl die Polymerisation bereits bei einer Temperatur von 180°C einsetzt, kann die Polymerisation im erfindungsgemäßen Verfahren auch bei höheren Temperaturen durchgeführt werden. Im erfindungsgemäßen Verfahren wird die Polymerisation bei einer Temperatur von 180°C oder höher durchgeführt. So kann die Polymerisation bei einer Polymerisationstemperatur von 200°C bis 300°C oder von 230°C bis 300°C oder von 240°C bis 280°C oder von 250°C bis 270°C, durchgeführt werden.

Während der Polymerisation kann die Temperatur verändert werden. Beispielsweise kann die Temperatur während der Polymerisation bis zu einer Endtemperatur erhöht werden. Die Änderungen in der Temperatur können verschieden ausgestaltet sein. Beispielsweise können die Änderungen in der Temperatur linear oder sprunghaft sein. Gemäß einer Ausführungsform sind die vorgenannten Temperaturen Endtemperaturen. Diese werden zum Ende des Polymerisationsvorgangs erreicht. Gemäß einer Ausführungsform wird die Temperatur während der Polymerisation im Wesentlichen konstant gehalten.

Es wurde gefunden, dass die Produkte einen niedrigen Erweichungspunkt aufweisen und wachsartig sein können, wenn die Polymerisation gänzlich bei niedrigeren Temperaturen, insbesondere bei Temperaturen unterhalb von 240°C, durchgeführt wird.

Die Polymerisation kann bei einem Druck von 10 bar oder mehr durchgeführt werden. So kann der Druck beispielsweise 10 bis 25 bar, insbesondere 10 bar bis 20 bar oder von 13 bar bis 18 bar, betragen. Wird die Polymerisation bei weniger als 10 bar durchgeführt, ist das Endprodukt von geringerer Qualität. Außerdem ist die Ausbeute geringer. Ferner kann durch die vorgenannten Drücke das Vorhandensein einer Gasphase im Wesentlichen vermieden werden. Dies ermöglicht eine bessere Kontrolle der Reaktion und ermöglicht einen besseren Wärmetransport.

Die Polymerisation kann kontinuierlich oder diskontinuierlich durchgeführt werden. Vorzugsweise wird die Polymerisation kontinuierlich durchgeführt. Die kontinuierliche Verfahrensweise hat den Vorteil, dass die Wärmeübertragung besser ist als im diskontinuierlichen Verfahren. Ferner sind die Betriebskosten bei kontinuierlicher Durchführung geringer und das Verfahren kann sicherer durchgeführt werden.

Die Polymerisation kann in unterschiedlichen Reaktionsbehältern durchgeführt werden. Bevorzugt wird die Polymerisation kontinuierlich in einem Rohrreaktor durchgeführt. Diese Verfahrensweise hat sich insbesondere bei der kontinuierlichen Polymerisation als vorteilhaft erwiesen. Im Rohrreaktor kann die Polymerisation insbesondere während einer Verweilzeit von 30 bis 180 Minuten, insbesondere von 40 bis 120 Minuten oder von 50 bis 90 Minuten, durchgeführt werden.

Sollen die Eigenschaften des erfindungsgemäß erhaltenen Kohlenwasserstoffharzes verändert werden, kann das erhaltene Kohlenwasserstoffharz teilweise oder vollständig in den Rohrreaktor rezykliert werden. Diese Maßnahme wird beispielsweise dann sinnvoll sein, wenn höhere Molekulargewichte des Kohlenwasserstoffharzes erzielt werden sollen. Die Rezyklierung erfolgt vorzugsweise in die Rohstoffmischung des Eingangsstroms. Die Entnahme für die Rezyklierung erfolgt vorzugsweise nach dem Reaktorausgang und vor dem Abtrennen der Oligomere vom Produktstrom. Im erfindungsgemäßen Verfahren können 0 bis 90 Gew.-% des Produktstroms, bevorzugt 25 bis 75 Gew.-%, bezogen auf die Masse des erhaltenen Produktstroms, in die Monomermischung des Eingangsstroms rezykliert werden. Eine derartige Rezyklierung lässt sich bei Rohrreaktoren besonders einfach durchführen.

Im erfindungsgemäßen Verfahren werden Oligomere, die von der cyclischen Diolefinverbindung stammende Einheiten und/oder von der Aromatenkomponente stammende Einheiten enthalten, vom Produktstrom abgetrennt und der Monomermischung wieder zugeführt. Vorteilhafterweise werden die Oligomere und das optionale nicht polymerisierbare Lösemittel nach der Polymerisation teilweise, bevorzugt vollständig, durch absatzweise oder vorzugsweise kontinuierliche Verdampfung aus dem Produktstrom entfernt. Vorteilhafterweise werden die Oligomere nach der Verdampfung absatzweise oder vorzugsweise kontinuierlich durch vollständige oder bevorzugt partielle Kondensation vom optionalen nicht polymerisierbaren Lösemittel teilweise oder bevorzugt vollständig getrennt. Vorteilhafterweise werden die Oligomere nach der Kondensation absatzweise oder vorzugsweise kontinuierlich der Monomermischung für eine weitere Polymerisation wieder zugeführt.

Die Oligomere können insbesondere bei einem Absolutdruck von 100 mbar oder weniger, insbesondere 50 mbar oder weniger, bevorzugt 30 mbar, und bei einer Temperatur von 80°C oder mehr, bevorzugt von 80°C bis 120°C, weiter bevorzugt von 90°C bis 120°C, noch weiter bevorzugt von 100°C bis 120°C, sieden. Besonders bevorzugt sieden die Oligomere bei einem Absolutdruck von 50 mbar oder weniger, bevorzugt 30 mbar, und einer Temperatur von 90°C bis 120°C, insbesondere von 100°C bis 120°C. Die Rückführung der vorgenannten Oligomere kann dadurch erreicht werden, dass ein Partialkondensator bei den vorgenannten Bedingungen betrieben wird, in dem die Oligomere von tiefer siedenden Bestandteilen getrennt werden.

Ferner können die Oligomere vorzugsweise ein Molekulargewicht von 100 bis 600 g/mol, weiter bevorzugt von 130 bis 600 g/mol, besonders bevorzugt von 150 bis 600 g/mol aufweisen.

Es hat sich herausgestellt, dass durch das Abtrennen der Oligomere vom Produktstrom und das anschließende Zuführen der Oligomere in die Monomermischung ein qualitativ hochwertiges Kohlenwasserstoffharz erhalten werden kann. Insbesondere kann ein Kohlenwasserstoffharz mit einem PDI von 1 bis kleiner 2,3 erhalten werden. Diese Harze zeigen insbesondere nach ihrer Hydrierung eine gute Verträglichkeit mit mPO und APAO, insbesondere mit mPO, APAO und EVAC.

Ferner kann durch das Abtrennen der Oligomere vom erhaltenen Produktstrom und das anschließende Zuführen in die Monomermischung im erfindungsgemäßen Verfahren die Polymerisation auch bei einer konstanten Temperatur durchgeführt werden, ohne dass schwerlösliche Produkte entstehen. Ferner können hierdurch Kohlenwasserstoffharze erhalten werden, die wenig Verfärbungen aufweisen. Schließlich lässt sich durch das Zurückführen der Oligomere die Ausbeute steigern.

Die zurückgeführten Oligomere können auch nicht polymerisierbare Bestandteile und/oder Lösemittel enthalten.

Nicht umgesetzte Monomere können thermisch von dem Lösemittel getrennt und wieder durch Zugabe in die Rohstoffmischung des Einsatzstroms rezykliert werden. Dies steigert zusätzlich die Harzausbeute.

Durch das selektive Abtrennen von Oligomeren, die in den vorstehend genannten Bereichen sieden oder die vorstehend aufgeführten Molekulargewichte aufweisen, kann das erfindungsgemäße Verfahren gut durchgeführt werden. Insbesondere kann das erfindungsgemäße Verfahren durch das selektive Abtrennen der Oligomere mit guten Ausbeuten im stationären Betrieb durchgeführt werden. Darüber hinaus muss der Rohstofffeed nicht angepasst werden. Ferner können auch verdünnte Rohstoffe wie Petroleumfraktionen oder Fraktionen aus der Teeraufbereitung eingesetzt werden.

Vorzugsweise läuft die Polymerisation der Monomermischung zum Kohlenwasserstoffharz über eine Kombination aus Diels-Alder-Reaktionen und radikalischen Verknüpfungen dieser Poly-Diels-Alder-Produkte ab.

Mit dem vorstehend beschriebenen Verfahren kann das erfindungsgemäße Kohlenwasserstoffharz erhalten werden.

Das erfindungsgemäße Kohlenwasserstoffharz enthält vorzugsweise von der cyclischen Diolefinverbindung stammende Wiederholeinheiten und Inden- und/oder C₁₋₄-Alkylindeneinheiten. Insbesondere kann das Kohlenwasserstoffharz auch weitere von der Aromatenkomponente stammende Einheiten enthalten. Beispielsweise kann das Kohlenwasserstoffharz auch von Styrol, α-Methylstyrol, o-Vinyltoluol, m-Vinyltoluol und/oder p-Vinyltoluol stammende Einheiten enthalten.

Für die cyclische Diolefinkomponente, die cyclische Diolefinverbindung und die Aromatenkomponente des erfindungsgemäßen Kohlenwasserstoffharzes gilt das vorstehend für das erfindungsgemäße Verfahren Gesagte entsprechend.

Vorzugsweise weist das erfindungsgemäße Kohlenwasserstoffharz zumindest abschnittsweise die allgemeine Strukturformel (I) auf 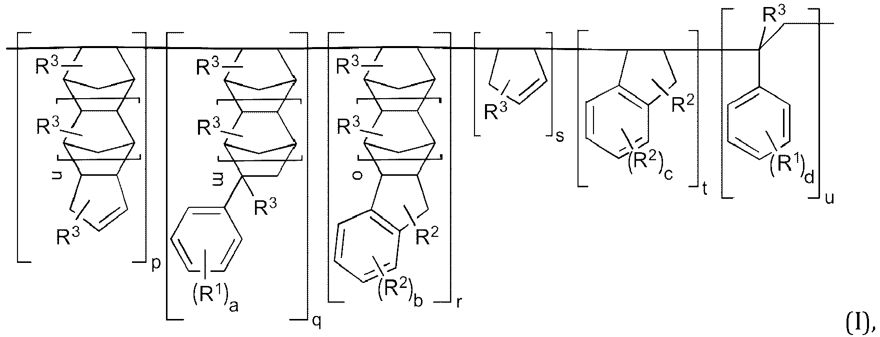
wobei jeder R¹ und jeder R² unabhängig voneinander ausgewählt ist aus der Gruppe bestehend aus -H, -CH₃, -C₂H₅, -*n*-C₃H₇, -CH(CH₃)₂, -*n*-C₄H₉, -CH₂CH(CH₃)₂, -CH(CH₃)(C₂H₅) und -C(CH₃)₃,
jeder R³ unabhängig voneinander -H, -CH₃ oder -C₂H₅ ist,
p, q, r, s, t und u unabhängig voneinander ganze Zahlen von 0 bis 8 sind,
jedes n, jedes m und jedes o unabhängig voneinander ganze Zahlen von 0 bis 6, vorzugsweise von 0 bis 4 weiter bevorzugt von 0 bis 2, sind, und
jedes a, jedes b, jedes c und jedes d unabhängig voneinander ganze Zahlen von 1 bis 4, vorzugsweise von 1 bis 2, sind,
mit der Maßgabe, dass das Kohlenwasserstoffharz ein zahlenmittleres Molekulargewicht Mn von 200 bis 600 g/mol, bevorzugt von 220 bis 500 g/mol, weiter bevorzugt von 250 bis 400 g/mol, aufweist und Inden- und/oder C₁₋₄-Alkylindeneinheiten enthält.

Demnach ist das Harz bevorzugt ein Copolymer, das durch radikalische Verknüpfung unterschiedliche Einheiten, die in der cyclischen Diolefinkomponente und der Aromatenkomponente enthalten sind oder Diels-Alder-Reaktionsprodukte von Bestandteilen der cyclischen Diolefinkomponente und/oder der Aromatenkomponente sind, miteinander verbindet. Die in der Strukturformel (I) mit der Variablen p bezeichnete Einheit ist durch einfache oder mehrfache Diels-Alder-Reaktionen von cyclischen Diolefinverbindungen untereinander entstanden. Die in der Strukturformel (I) mit den Variablen q und r bezeichneten Einheiten sind durch Diels-Alder-Reaktion von cyclischen Diolefinverbindungen mit ethylenisch ungesättigten aromatischen Verbindungen oder Inden bzw. C₁-C₄-Alkylinden entstanden, wobei wahlweise zusätzlich weitere cyclische Diolefinverbindungen durch Diels-Alder-Reaktionen eingebaut wurden. Die in der Strukturformel (I) mit der Variablen s bezeichnete Einheit ist eine durch radikalische Verknüpfung eingebaute cyclische Diolefinverbindung, die keine Diels-Alder-Reaktion eingegangen ist. Die in der Strukturformel (I) mit der Variablen t bezeichnete Einheit ist eine durch radikalische Verknüpfung eingebaute, Inden- oder C₁₋₄-Alkylindeneinheit, die keine Diels-Alder-Reaktion mit einer cyclischen Diolefinverbindung eingegangen ist. Die in der Strukturformel (I) mit der Variablen u bezeichnete Einheit ist eine über radikalische Verknüpfung eingebaute, aus der ethylenisch ungesättigten aromatischen Verbindung stammende Einheit, die keine Diels-Alder-Reaktion mit einer cyclischen Diolefinverbindung eingegangen ist.

In der Strukturformel (I) können sich insbesondere die Reihenfolge, das Vorhandensein und die Anzahl der Einheiten mit den Variablen p, q, r, s, t und u für einzelne Copolymermoleküle des Kohlenwasserstoffharzes statistisch unterscheiden. Die Variablen n, m und o zeigen an, ob in den jeweiligen Einheiten eine oder mehrere cyclische Diolefinverbindungen durch Diels-Alder-Reaktionen miteinander verbunden sind. Vorteilhafterweise gilt für die mit der Variablen p bezeichnete Einheit in der Strukturformel (I), dass wenn p größer als 1 ist, jedes n unabhängig voneinander eine ganze Zahl von 0 bis 6, vorzugsweise von 0 bis 4, weiter bevorzugt von 0 bis 2, sein kann. Entsprechendes gilt für die mit den Variablen q und r bezeichneten Einheiten in der Strukturformel (I).

Wie in der Strukturformel (I) gezeigt, können die verschiedenen Einheiten substituiert sein. Die aromatischen Einheiten können insbesondere mehrfach substituiert sein.

Das erfindungsgemäße Kohlenwasserstoffharz weist einen PDI von 1 bis kleiner 2,3 auf. Vorzugweise weist das Kohlenwasserstoffharz einen Polydispersitätsindex (PDI) von 1 bis 2,1, bevorzugt von 1,5 bis 2,0, weiter bevorzugt von 1,5 bis 1,95, auf. Es wurde gefunden, dass Kohlenwasserstoffharze mit den vorgenannten PDIs eine sehr gute Verträglichkeit mit Basispolymeren von Heißklebern, insbesondere mit mPO, APAO und EVAC, aufweisen.

Vorzugsweise enthält das erfindungsgemäße Kohlenwasserstoffharz 1 bis 20 Gew.-%, bevorzugt 4 bis 20 Gew.-%, weiter bevorzugt 4 bis 16 Gew.-%, noch weiter bevorzugt 5 bis 15 Gew.-%, besonders bevorzugt 7 bis 13 Gew.-%, bezogen auf die Gesamtmasse des Kohlenwasserstoffharzes, Inden- und/oder C₁₋₄-Alkylindeneinheiten. Es wurde gefunden, das Kohlenwasserstoffharze mit den vorgenannten Mengen an Inden-und/oder C₁₋₄-Alkylindeneinheiten eine sehr gute Verträglichkeit mit Basispolymeren von Heißklebern, insbesondere mit mPO, APAO und EVAC, aufweisen.

Der Indengehalt im Kohlenwasserstoffharz kann beispielsweise mittels Pyrolyse-Gaschromatographie mit einem Flammenionisationsdetektor (FID) bestimmt werden. Mit dieser Methode kann auch der Gehalt der übrigen Einheiten im Kohlenwasserstoffharz bestimmt werden.

Vorzugsweise enthält das Kohlenwasserstoffharz 40 bis 85 Gew.-%, bevorzugt 45 bis 70 Gew.-%, weiter bevorzugt 45 bis 65 Gew.-% von der cyclischen Diolefinverbindung stammende Einheiten, bezogen auf die Gesamtmasse des Kohlenwasserstoffharzes.

Wird als Aromatenkomponente ein Gemisch enthaltend Inden und/oder C₁₋₄-Alkylinden und mindestens eine, insbesondere mindestens zwei, ethylenisch ungesättigte aromatische Verbindungen mit jeweils unabhängig voneinander 8 bis 15, vorzugsweise 8 bis 13, Kohlenstoffatomen eingesetzt, kann das Kohlenwasserstoffharz vorzugsweise neben Inden- und/oder C₁₋₄-Alkylindeneinheiten auch weitere von den ethylenisch ungesättigten aromatischen Verbindungen stammende Einheiten aufweisen. Vorzugsweise enthält das Kohlenwasserstoffharz 5 bis 25 Gew.-%, bevorzugt 10 bis 25 Gew.-%, weiter bevorzugt 15 bis 25 Gew.-% Inden- und/oder C₁₋₄-Alkylindeneinheiten und von ethylenisch ungesättigten aromatischen Verbindung stammende Einheiten, bezogen auf die Gesamtmasse des Kohlenwasserstoffharzes.

Das Kohlenwasserstoffharz weist vorzugsweise ein Mz von 800 bis 2450 g/mol, bevorzugt von 800 bis 1800 g/mol, weiter bevorzugt von 800 bis 1750 g/mol, noch weiter bevorzugt von 800 bis 1700 g/mol, auf.

Dem Fachmann sind verschiedene Molekulargewichte bekannt. So sind ihm das zahlenmittlere Molekulargewicht Mn, das gewichtsmittlere Molekulargewicht Mw und das zentrifugenmittlere Molekulargewicht Mz bekannt. Vorliegend wird das zentrifugenmittlere Molekulargewicht Mz auch als Molekulargewicht Mz abgekürzt. Das Verhältnis Mw/Mn des zahlenmittleren Molekulargewichts Mn und des gewichtsmittleren Molekulargewichts Mw wird als Polydispersität PDI bezeichnet.

Verfahren zur Bestimmung der Molekulargewichte Mn, Mw und Mz sind dem Fachmann bekannt. So kann er die Molekulargewichte Mn, Mw und Mz beispielsweise mit Hilfe der Gelpermeationschromatographie oder mittels Massenspektrometrie, bevorzugt mit Gelpermeationschromatographie, bestimmen. Für Messungen mit der Gelpermeationschromatographie wird vorzugsweise THF als Eluent verwendet. Als Kalibrierungsstandard wird vorzugsweise Polystyrol eingesetzt. Die Messungen mit der Gelpermeationschromatographie werden vorteilhafterweise mit linearen Säulen mit einer Porosität von 1000 Å durchgeführt. Es kommen vorzugsweise Brechungsindex- und UV Detektoren zum Einsatz. Mit einem UV Detektor kann zusätzlich zu der Molmasse auch der Hydriergrad eines Molmasseabschnittes angezeigt werden.

Ferner weist das Kohlenwasserstoffharz bevorzugt einen Mn von 200 bis 600 g/mol, weiter bevorzugt von 220 bis 500 g/mol, besonders bevorzugt von 250 bis 400 g/mol, auf. Vorteilhafterweise weist das erfindungsgemäße Kohlenwasserstoffharz einen Mw von 300 bis 800 g/mol, vorzugweise von 400 bis 800 g/mol, besonders bevorzugt von 500 bis 800 g/mol, auf.

Wie für den Fachmann ersichtlich, sind die für die Oligomere angegebenen Molekulargewichte nicht direkt vergleichbar mit den für die erfindungsgemäßen Kohlenwasserstoffharze angegebenen, bevorzugten zahlenmittleren oder gewichtsmittleren Molekulargewichte. Dies liegt insbesondere daran, dass die Molekulargewichte für die Oligomere absolute Molekulargewichte sind, während die für die erfindungsgemäßen Kohlenwasserstoffharze angegebenen, bevorzugten Molekulargewichte relative Molekulargewichte in Bezug auf Polystyrolstandards mit den vorgenannten Molekulargewichten sind.

Das Kohlenwasserstoffharz weist vorzugsweise einen Erweichungspunkt, bestimmt nach der Ring und Kugel Methode gemäß Norm ASTM D3461, von 80°C bis 140°C, bevorzugt von 90°C bis 130°C, weiter bevorzugt von 100°C bis 120°C, auf.

Das erfindungsgemäße Kohlenwasserstoffharz kann ferner eine geringfügige Färbung aufweisen. Vorzugweise weist das Kohlenwasserstoffharz eine Gardner Farbzahl von 14 oder weniger, bevorzugt von 12 oder weniger, weiter bevorzugt 11 oder weniger, auf. Dadurch weist das erfindungsgemäße Kohlenwasserstoffharz eine gute Hydrierbarkeit und eine gute Verträglichkeit mit anderen Komponenten, beispielsweise in Heißklebern, Kautschukprodukten, Bitumen und Druckfarben auf.

Die Gardner Farbzahl wird vorzugsweise nach ISO 4630, insbesondere ISO 4630:2015, bestimmt.

Ferner lässt sich das erfindungsgemäße Kohlenwasserstoffharz gut hydrieren. Insbesondere ist das erfindungsgemäße Kohlenwasserstoffharz in einem Gemisch aus gesättigten, bei Raumtemperatur flüssigen Kohlenwasserstoffen, insbesondere aromatenfreie raffinierte Benzine, bei Raumtemperatur löslich. Derartige Gemische sind im Handel unter der Bezeichnung D40, beispielsweise Exxsol D40 oder Shellsol D40, erhältlich.

Ferner kann das erfindungsgemäße Kohlenwasserstoffharz durch Hydrieren innerhalb von 0,5 bis 5 Stunden, vorzugsweise von 0,5 bis 3 Stunden, besonders bevorzugt von 0,75 bis 1,5 Stunden auf einen Yellowness-Index von 5 oder weniger, vorzugsweise von 3 oder weniger, besonders bevorzugt von 1 oder weniger, gebracht werden. Der Yellowness Index wird nach der Norm ASTM D1209-05(2011) oder ISO 6271:2015 bestimmt. Gut hydrierbare Kohlenwasserstoffharze können verfahrenstechnisch einfacher und kostengünstiger hydriert werden. Die erhaltenen hydrierten Kohlenwasserstoffharze sind mit anderen Komponenten, beispielsweise in Heißklebern gut verträglich. Da sie wenige Verfärbungen aufweisen, können sie auch für ein breites Spektrum an Anwendungen eingesetzt werden.

Beim Hydrieren kann ein hoher Hydriergrad erreicht werden. Beispielsweise kann das erfindungsgemäße Kohlenwasserstoffharz auf einen Restaromatengehalt von weniger als 0,2 %, vorzugsweise weniger als 0,15 %, besonders bevorzugt weniger als 0,09% hydriert werden. Niedrige Restaromatengehalte bewirken stabilere Kohlenwasserstoffharze hinsichtlich Verfärbungen.

Gemäß einer Ausführungsform wird das erfindungsgemäße Kohlenwasserstoffharz durch das erfindungsgemäße Verfahren, insbesondere durch das voranstehend beschriebene Verfahren, erhalten.

Das erfindungsgemäße Kohlenwasserstoffharz kann direkt für die hierin genannten Anwendungen, insbesondere für Klebstoff-Anwendungen verwendet werden.

Das erfindungsgemäße Kohlenwasserstoffharz kann, insbesondere nach Abtrennen von Lösemittel, nicht umgesetztem Monomer und Oligomeren, auch weiterverarbeitet werden. Insbesondere kann das erfindungsgemäße Kohlenwasserstoffharz funktionalisiert und/oder hydriert werden.

Hierzu kann im erfindungsgemäßen Verfahren eine Hydrierung anschließend an die Polymerisation durchgeführt werden. Durch Hydrierung des Kohlenwasserstoffharzes wird ein hydriertes Kohlenwasserstoffharz erhalten. Dementsprechend wird das Kohlenwasserstoffharz vorzugsweise in einem anschließenden Hydrierungsschritt teilweise oder vollständig hydriert, um ein hydriertes Kohlenwasserstoffharz zu erhalten.

Das Kohlenwasserstoffharz kann dabei insbesondere teilweise oder vollständig hydriert werden. Die Hydrierung erfolgt vorzugsweise in Gegenwart eines Katalysators. Als Katalysator kommen verschiedene Katalysatoren in Betracht. So können in der Hydrierung Nickel-, Palladium-, Kobalt-, Platin- und Rhodium-basierte Katalysatoren eingesetzt werden. Vorteilhafterweise wird Nickel als Katalysator eingesetzt. Die vorgenannten Katalysatoren können auf einem Träger wie Aluminiumoxid, Siliciumdioxid, Zeolithen, Tonmineralen wie Montmorillonit und Siliciumcarbid aufgebracht sein. Bevorzugt wird die Hydrierung des Kohlenwasserstoffharzes in Gegenwart eines Nickelkatalysators durchgeführt. Gemäß einer weiteren bevorzugten Ausführungsform wird ein Nickelkatalysator auf einem Aluminiumoxid/Siliciumoxid-Träger eingesetzt. Diese Katalysatoren sind im Handel erhältlich. Der Nickelkatalysator kann dabei insbesondere in heterogener Form vorliegen. Dadurch kann er nach Beendigung der Hydrierung durch Filtrieren einfach entfernt werden kann.

Der Begriff "teilweise Hydrierung" wird dahingehend verstanden, dass überwiegend olefinische Doppelbindungen hydriert werden oder dass auch zusätzlich einige der aromatischen Einheiten des Kohlenwasserstoffharzes hydriert werden. Vorzugsweise wird das Kohlenwasserstoffharz in der Hydrierung vollständig hydriert. Bei der vollständigen Hydrierung werden vorteilhafterweise mindestens 70%, bevorzugt mindestens 90%, weiter bevorzugt mindestens 95%, besonders bevorzugt mindestens 99% der olefinischen Doppelbindungen und vorteilhafterweise mindestens 70%, bevorzugt mindestens 90%, vorzugsweise mindestens 95%, besonders bevorzugt mindestens 99% der aromatischen Doppelbindungen hydriert. In teilweisen Hydrierungen werden vorzugsweise mindestens 70%, bevorzugt mindestens 90%, weiter bevorzugt mindestens 95%, besonders bevorzugt mindestens 99% der olefinischen Doppelbindungen und vorteilhafterweise 50% oder weniger, bevorzugt 30% oder weniger, weiter bevorzugt 10% oder weniger der aromatischen Doppelbindungen hydriert.

Die vollständige Hydrierung hat den Vorteil, dass weniger Nebenprodukte durch Nachreaktionen gebildet werden und somit Verfärbungen im Kohlenwasserstoffharz möglichst weitgehend vermieden werden können.

Ob das Kohlenwasserstoffharz teilweise oder vollständig hydriert wurde, kann mittels NMR Spektroskopie bestimmt werden, insbesondere durch Bestimmung des Gehalts an aromatischen und/oder olefinischen Doppelbindungen mittels ¹H NMR Spektroskopie.

Die Hydrierung kann in Gegenwart eines Lösemittels, insbesondere eines aliphatischen Lösemittels, durchgeführt werden. Ebenfalls kann als Lösemittel ein Gemisch aus gesättigten, bei Raumtemperatur flüssigen Kohlenwasserstoffen eingesetzt werden, vorzugsweise mit einem Siedepunkt zwischen 155°C und 170°C, weiter bevorzugt zwischen 160°C und 165°C. Geeignete Lösemittel sind beispielsweise raffinierte Benzine. Solche Gemische sind im Handel unter der Bezeichnung D40, beispielsweise Exxsol D40 oder Shellsol D40, erhältlich. Durch Zugabe des Lösemittels kann die Viskosität des Kohlenwasserstoffharzes verringert werden. Ferner kann mit der Verwendung eines aliphatischen Lösemittels wie D40 gegenüber der Verwendung eines aromatischen Lösemittels Wasserstoff gespart werden.

Vorzugsweise kann dem Kohlenwasserstoffharz 80 Gew.-% oder mehr, insbesondere 90 Gew.-% oder mehr oder 100 Gew.-% oder mehr, bezogen auf die Masse an Kohlenwasserstoffharz, an Lösemittel zugegeben werden. Vorzugsweise wird eine Hydrierungsmischung enthaltend Kohlenwasserstoffharz und Lösemittel eingesetzt. Vorteilhafterweise ist die Hydrierungsmischung eine Lösung. Vorzugsweise weist die Hydrierungsmischung 50% Kohlenwasserstoffharz auf.

Die Hydrierung kann diskontinuierlich oder kontinuierlich erfolgen. Vorzugsweise erfolgt die Hydrierung kontinuierlich. Die kontinuierliche oder diskontinuierliche Hydrierung ist dabei unabhängig von der Polymerisation zum nicht hydrierten Kohlenwasserstoffharz. So kann die Polymerisation kontinuierlich und die Hydrierung diskontinuierlich durchgeführt werden oder umgekehrt. Ferner können die Polymerisation und die Hydrierung kontinuierlich durchgeführt werden. Schließlich können die Polymerisation und die Hydrierung diskontinuierlich durchgeführt werden.

Vorteilhafterweise kann die Hydrierung in einem Schlaufenreaktor durchgeführt werden. Zweckmäßigerweise wird die Hydrierungsmischung während der Hydrierung umgewälzt. Der Schlaufenreaktor weist vorteilhafterweise einen Gas-Flüssigkeits-Ejektor auf. Durch die Verwendung eines Schlaufenreaktors in Verbindung mit einem Gas-Flüssigkeits-Ejektor kann eine besonders gute Durchmischung des zu hydrierenden Kohlenwasserstoffharzes mit Wasserstoff und dem gegebenenfalls zugesetzten Katalysator erreicht werden, wodurch die Hydrierdauer verkürzt werden kann.

Vorzugsweise wird die Hydrierung bei einem Druck von mehr als 60 bar, insbesondere von 65 bar bis 105 bar oder von 65 bar bis 100 bar oder von 70 bar bis 95 bar, durchgeführt. Dadurch kann die Hydrierung des Kohlenwasserstoffharzes bis zum gewünschten Hydrierungsgrad eingestellt werden.

Die Hydrierung wird ferner bevorzugt bei einer Temperatur von 240°C oder höher, insbesondere von 240°C bis 300°C oder von 250°C bis 280°C, durchgeführt. Es wurde festgestellt, dass bei einer Hydrierungstemperatur von unter 240°C die Hydrierung langsam abläuft und sich bei Temperaturen von über 300°C wieder vermehrt Nebenprodukte bilden können.

In einem üblich großtechnisch verwendeten Schlaufenreaktor kann die Hydrierung 50 bis 160 Minuten lang, vorzugsweise 60 bis 150 Minuten lang, und besonders bevorzugt 80 bis 150 Minuten lang, durchgeführt werden. Dadurch können der gewünschte Hydrierungsgrad des hydrierten Kohlenwasserstoffharzes sowie die Helligkeit eingestellt werden.

Gemäß einer besonders bevorzugten Ausführungsform der Erfindung ist sowohl nach der Polymerisation als auch nach der Hydrierung eine Entspannungsstufe vorgesehen. Die erste Entspannungsstufe nach der Polymerisation dient dem Entfernen von leichtflüchtigen Komponenten, insbesondere von Lösemittel und/oder nicht reagiertem Monomer und/oder Oligomer aus dem Produktstrom. Durch das Ausnutzen des Druckgefälles in der ersten Entspannungsstufe wird der Produktstrom geflasht, wodurch die leichtflüchtigeren Komponenten entfernt werden. Vorzugsweise kann der das Kohlenwasserstoffharz enthaltende Produktstrom in die erste Entspannungsstufe bei einer Temperatur von 200°C bis 300°C, besonders bevorzugt bei einer Temperatur von 220°C bis 260°C oder 230°C bis 250°C eingeleitet werden.

Vorzugsweise weist das Kohlenwasserstoffharz nach der ersten Entspannungsstufe nur noch 3 Gew.-% oder weniger, bevorzugt 1 Gew.-% oder weniger, weiter bevorzugt 0,5 Gew.-% oder weniger an Lösemittel und/oder nicht reagiertem Monomer, jeweils bezogen auf die Masse des Kohlenwasserstoffharzes, auf.

In der ersten Entspannungsstufe kann der Absolutdruck auf 1 bar oder weniger, vorzugsweise 0,1 bar oder weniger und besonders bevorzugt auf 0,03 bar oder weniger, gesenkt werden. Durch das Abfallen des Drucks kann auf aufwändige gerührte Anlagen wie Dünnschichtverdampfer oder Wasser-Strippung-Einrichtungen verzichtet werden. Dadurch kann das Verfahren kostengünstiger und weniger anfällig für Ausfälle durchgeführt werden. Ein Dünnschichtverdampfer kann jedoch im Verfahren nach der Polymerisation und anschließender erster Entspannungsstufe eingesetzt werden. Hierdurch kann ein niedriger Gehalt an Lösemittel in dem Kohlenwasserstoffharz nach der Polymerisation erreicht werden.

Nach der Hydrierung kann vorzugsweise eine zweite Entspannungsstufe vorgesehen sein. In der zweiten Entspannungsstufe kann zumindest ein Teil der flüchtigen Bestandteile, insbesondere des Lösemittels, aus dem hydrierten Kohlenwasserstoffharz entfernt werden, ohne dass durch zusätzliche thermische Belastung eine große Menge an Nebenprodukten entsteht und sich die Farbzahlen des Harzes verschlechtern. Bevorzugt weist das hydrierte Kohlenwasserstoffharz nach der zweiten Entspannungsstufe 2 Gew.-% oder weniger, vorzugsweise 0,5 Gew.-% oder weniger oder 0,03 Gew.-% oder weniger an Lösemittel, jeweils bezogen auf die Masse des hydrierten Kohlenwasserstoffharzes, auf.

Die Druckabsenkung in der zweiten Entspannungsstufe kann in zwei Entspannungsschritten vorgenommen werden. Dabei kann in einem ersten Entspannungsschritt der Absolutdruck auf 0,5 bar oder weniger, vorzugsweise 0,2 bar oder weniger, bevorzugt 0,05 bar oder weniger oder besonders bevorzugt auf 0,01 bar oder weniger gesenkt werden. Nach der Hydrierung wird vorzugsweise zunächst der Katalysator entfernt. Der Katalysator kann beispielsweise durch Filtration entfernt werden. Die Hydrierungsmischung wird bevorzugt mit einer Temperatur von 190°C bis 270°C, weiter bevorzugt von 200°C bis 260°C, weiter bevorzugt von 210°C bis 250°C, weiter bevorzugt von 220°C bis 240°C, noch weiter bevorzugt von 230°C in den ersten Entspannungsschritt eingeleitet. Nach dem ersten Entspannungsschritt kann die Hydrierungsmischung in den zweiten Entspannungsschritt mit einer Temperatur von 190°C bis 270°C, vorzugsweise von 200°C bis 260°C, besonders bevorzugt von 210°C bis 250°C, oder von 220°C bis 240°C eingeleitet werden. Im zweiten Entspannungsschritt kann der Absolutdruck vorzugsweise auf 0,1 bar oder weniger, bevorzugt 0,05 bar oder weniger, weiter bevorzugt 0,03 bar oder weniger, weiter bevorzugt 0,01 bar oder weniger, gesenkt werden.

Zusätzlich kann die Hydrierungsmischung, aus der zuvor gegebenenfalls zugesetzter Katalysator entfernt wurde, unmittelbar vor der zweiten Entspannungsstufe in eine Vorentspannungsstufe eingeleitet werden. Die Hydrierungsmischung kann dabei eine Temperatur von 240°C bis 300°C, vorzugsweise von 250°C bis 290°C und besonders bevorzugt von 260°C bis 280°C aufweisen. Vorzugsweise kann in der Vorentspannungsstufe der Überdruck auf 3 bar oder weniger, bevorzugt 2 bar oder weniger, weiter bevorzugt 1,5 bar oder weniger, noch weiter bevorzugt 1 bar oder weniger, abgesenkt werden.

Ist eine Vorentspannungsstufe vorgesehen, wird vorzugsweise die aus der Vorentspannungsstufe entnommene Mischung in die zweite Entspannungsstufe eingeleitet.

Durch die Durchführung einer oder mehrerer Entspannungsstufen kann der Zeitraum verringert werden, in dem das Kohlenwasserstoffharz und/oder das hydrierte Kohlenwasserstoffharz auf einer hohen Temperatur gehalten wird. Auch diese Maßnahme kann der Verringerung von Nebenprodukten dienen.

Gemäß einer Ausführungsform sind nach der Hydrierung zwei Entspannungsverdampfungsschritte vorgesehen. Diese zwei Entspannungsverdampfungsschritte bilden vorzugsweise die zweite Entspannungsstufe. Hierzu wird vorzugsweise zunächst der Katalysator entfernt. Der Katalysator kann beispielsweise durch Filtration entfernt werden. Anschließend wird im ersten Entspannungsverdampfungsschritt die vorzugsweise katalysatorfreie Hydrierungsmischung in einen ersten Druckbehälter geleitet. Der Druck in dem ersten Druckbehälter ist niedriger als der Druck der Hydrierungsmischung. Vorzugsweise wird der Druck der Hydrierungsmischung im ersten Druckbehälter auf einen Absolutdruck von 3 bar oder weniger, bevorzugt 2 bar oder weniger, weiter bevorzugt 1,5 bar oder weniger, noch weiter bevorzugt 1 bar oder weniger, abgesenkt. Hierdurch kann insbesondere Wasserstoff aus der Hydrierungsmischung entfernt werden.

Im zweiten Entspannungsverdampfungsschritt wird die resultierende Mischung in einen zweiten Druckbehälter geleitet. Der Druck in dem zweiten Druckbehälter ist niedriger als der Druck der resultierenden Mischung. Vorzugsweise wird der Druck der resultierenden Mischung im zweiten Druckbehälter auf 0,1 bar oder weniger, bevorzugt 0,05 bar oder weniger, besonders bevorzugt 0,03 bar oder weniger, abgesenkt. Hierdurch kann insbesondere Lösemittel entfernt werden. Vorteilhafterweise ist nach dem zweiten Entspannungsverdampfungsschritt ein Dünnschichtverdampfer vorgesehen, der bei 0,01 bar oder weniger, bevorzugt bei 0,005 bar oder weniger, weiter bevorzugt bei 0,003 bar oder weniger betrieben wird. Auf diese Weise kann das Lösemittel aus dem hydrierten Kohlenwasserstoffharz weitgehend entfernt werden.

Die Hydrierungsmischung wird bevorzugt mit einer Temperatur von 190°C bis 270°C, weiter bevorzugt von 200°C bis 260°C, weiter bevorzugt von 210°C bis 250°C, weiter bevorzugt von 220°C bis 240°C, noch weiter bevorzugt von 230°C in den ersten Entspannungsverdampfungsschritt eingeleitet. Nach dem ersten Entspannungsverdampfungsschritt kann die Hydrierungsmischung in den zweiten Entspannungsverdampfungsschritt mit einer Temperatur von 190°C bis 270°C, vorzugsweise von 200°C bis 260°C, besonders bevorzugt von 210°C bis 250°C, oder von 220°C bis 240°C eingeleitet werden. Nach dem zweiten Entspannungsverdampfungsschritt kann die Hydrierungsmischung in den Dünnschichtverdampfer mit einer Temperatur von 180°C bis 260°C, vorzugsweise von 190°C bis 250°C, besonders bevorzugt von 200°C bis 240°C, oder von 210°C bis 230°C eingeleitet werden.

Das erfindungsgemäße hydrierte Kohlenwasserstoffharz ist erhältlich durch Hydrieren eines erfindungsgemäßen Kohlenwasserstoffharzes und/oder durch das hierin beschriebene Verfahren.

Vorzugsweise liegen in dem hydrierten Kohlenwasserstoffharz die olefinischen Doppelbindungen zu mindestens 70%, bevorzugt mindestens 90% oder mindestens 95% oder mindestens 99%, hydriert vor. Durch teilweises oder vollständiges Hydrieren der olefinischen Doppelbindungen kann die Bildung von Verfärbungen im hydrierten Kohlenwasserstoffharz reduziert werden. Alternativ oder zusätzlich können die aromatischen Doppelbindungen zu mindestens 70%, vorzugsweise mindestens 90% oder mindestens 95% oder mindestens 99% hydriert vorliegen. Durch teilweises oder vollständiges Hydrieren der aromatischen Doppelbindungen kann die Bildung von Verfärbungen im hydrierten Kohlenwasserstoffharz reduziert werden. Es werden stabilere Harze erhalten.

Das hydrierte Kohlenwasserstoffharz weist vorteilhafterweise einen Restgehalt an olefinischen Doppelbindungen von weniger als 0,1 %, vorzugsweise weniger als 0,05 %, besonders bevorzugt weniger als 0,01%, und einen Restaromatengehalt von weniger als 0,2 %, vorzugsweise weniger als 0,15 %, besonders bevorzugt weniger als 0,09 %, auf. Der Gehalt an Doppelbindungen kann mittels ¹H NMR Spektroskopie bestimmt werden.

Vorzugsweise weist das hydrierte Kohlenwasserstoffharz ein Mz von 800 bis 2500 g/mol, vorzugsweise 800 bis 1800 g/mol, weiter bevorzugt von 800 bis 1600 g/mol, besonders bevorzugt von 800 bis 1400 g/mol, auf. Ferner weist das hydrierte Kohlenwasserstoffharz vorteilhafterweise einen Mn von 200 bis 600 g/mol, vorzugsweise von 220 bis 500 g/mol, besonders bevorzugt von 220 bis 400 g/mol, auf. Vorzugsweise weist das hydrierte Kohlenwasserstoffharz einen Mw von 300 bis 800 g/mol, weiter bevorzugt von 250 bis 700 g/mol, besonders bevorzugt von 300 bis 600 g/mol, auf.

Das hydrierte Kohlenwasserstoffharz weist vorzugsweise einen Polydispersitätsindex von 1 bis kleiner 2,3, bevorzugt von 1,5 bis 2,2, besonders bevorzugt von 1,5 bis 2,1, auf.

Der Erweichungspunkt des hydrierten Kohlenwasserstoffharzes nach der Ring und Kugel Methode gemäß Norm ASTM D3461 beträgt vorzugsweise von 80°C bis 140°C, vorzugsweise von 90°C bis 130°C oder von 90°C bis 125°C.

Ferner kann das hydrierte Kohlenwasserstoffharz eine Hazen-Farbzahl von 40 oder weniger, insbesondere von 25 oder weniger aufweisen. Die Hazen-Farbzahl wird nach der Norm DIN EN ISO 6271:2016-05 bestimmt. Die Hazen-Farbzahl kann auch als Platin-Cobalt-Farbzahl bezeichnet werden.

Das hydrierte Kohlenwasserstoffharz weist vorteilhafterweise einen Yellowness Index von 3 oder weniger, vorzugsweise von 1 oder weniger auf. Der Yellowness Index wird nach der Norm ASTM D1209-05(2011) bestimmt.

Die oben angeführten Vorteile des Kohlenwasserstoffharzes, insbesondere die gute Verträglichkeit, die geringe Färbung, die vielseitige Anwendbarkeit und die gute Stabilität gelten für das hydrierte Kohlenwasserstoffharz entsprechend.

Gegenstand der Erfindung ist ferner eine Zusammensetzung enthaltend
- ein erfindungsgemäßes Kohlenwasserstoffharz oder ein erfindungsgemäßes hydriertes Kohlenwasserstoffharz, und
- ein Klebstoffbasispolymer, beispielsweise ein Metallocenpolyolefin oder ein Ethylenvinylacetat-Copolymer oder ein amorphes Polyalphaolefin oder ein Styrol-Blockcopolymer.

Weiterer Gegenstand der Erfindung ist die Verwendung eines erfindungsgemäßen Kohlenwasserstoffharzes oder eines erfindungsgemäßen hydrierten Kohlenwasserstoffharzes als Klebrigmacher oder Tackifier in Heißklebern, insbesondere in Heißklebern basierend auf Metallocenpolyolefin, Ethylenvinylacetat-Copolymer, amorphen Polyalphaolefinen oder Styrol-Block-Copolymeren, und/oder in lösemittelhaltigen Klebstoffen, insbesondere in lösemittelhaltigen Styrol-BlockCopolymer Klebstoffen.

Gegenstand der Erfindung ist auch die Verwendung des Kohlenwasserstoffharzes als Modifikationsmittel in Kautschukprodukten, insbesondere zur Verbesserung der mechanischen und dynamischen Eigenschaften in Kautschukprodukten, in Bitumen, insbesondere als Additiv und/oder als Hydrophobiermittel in Bitumen, insbesondere für Asphalt, oder als Modifizierungs- und/oder Hydrophobierungsmittel in Druckfarben.

Außerdem ist Gegenstand der Erfindung die Verwendung des hydrierten Kohlenwasserstoffharzes als Additiv in Lack, in Plastik, insbesondere als Modifikationsmittel in Plastik, in Gummi, in Bitumen, insbesondere als Hydrophobiermittel in Bitumen, beispielsweise für Dachbahnen, in Polypropylenfolien, insbesondere als Modifizierungs- und/oder Hydrophobiermittel in Polypropylenfolien, insbesondere BOPP-Folien, in Kosmetika oder als Klebrigmacher in Kleberzusammensetzungen, insbesondere für Applikationen in der Hygieneartikelindustrie sowie für den Einsatz in Nahrungsmittelverpackungen.

### BEISPIELE

Nachfolgend wird die Erfindung anhand einer beispielhaften, nicht limitierenden Herstellung eines Kohlenwasserstoffharzes mit anschließender Hydrierung zur Herstellung eines hydrierten Kohlenwasserstoffharzes näher erläutert. Die angegebenen Drücke sind Absolutdrücke.

In dem in Figur 1 schematisch dargestellten kontinuierlichen Polymerisationsverfahren befindet sich im Vorratstank 11 eine Petroleumfraktion (erhältlich als BN-200 von Dow Chemical, nachfolgend als BN-200 bezeichnet), die reich an Dicyclopentadien, Methylcyclopentadien-Dimeren und Cyclopentadien-Methylcyclopentadien-Dimeren (nachfolgend als cyclische Diolefinverbindung bezeichnet) ist. Das BN-200 enthält etwa 50 Gew.-% cyclische Diolefinverbindung, etwa 2,5 Gew.-% Inden und C₁₋₄-Alkylinden, etwa 6 Gew.-% ethylenisch ungesättigte aromatische Verbindungen und etwa 41,5 Gew.-% nicht reaktive Komponenten, jeweils bezogen auf die Gesamtmasse von BN-200. Im Vorratstank 12 befindet sich eine weitere Petroleumfraktion (nachfolgend als C9-Fraktion bezeichnet), die reich an Styrol, Vinyltoluolen, Inden und Methylindenen ist (nachfolgend als ethylenisch ungesättigte Aromaten bezeichnet). Die C9-Fraktion ist ein Aromatengemisch. Die C9-Fraktion enthält etwa 27 Gew.-% Inden und Alkylindenderivate, 1 Gew.-% Styrol, 12,5 Gew.-% Alkylderivate von Styrol und etwa 59,5 Gew.-% nicht reaktive Komponenten. Vorratstank 13 enthält Dicyclopentadien mit einer Reinheit von mindestens 95%. Vorratstank 14 enthält Xylol als inertes Lösemittel.

### Generelle Versuchsdurchführung

Aus den Vorratstanks 11, 12, 13 und 14 wird in der Vorlage 15 eine Monomermischung hergestellt. Die Monomermischung wird beim Einleiten in der Vorlage 15 mittels eines statischen Mischers vermischt. Die Vorlage 15 kann auch ein Rührwerk zur Durchmischung aufweisen. Aus den Vorratstanks 11, 12, 13 und 14 werden die Bestandteile BN-200, C9-Fraktion, reines Dicyclopentadien und Xylol in einer solchen Menge entnommen, dass die Monomermischung cyclische Diolefinverbindung und ethylenisch ungesättigte Aromaten in einem Verhältnis von etwa 2:1 bis etwa 4:1 enthält, bezogen auf die Masse der cyclischen Diolefinverbindung und ethylenisch ungesättigten Aromaten in der Monomermischung. Das Verhältnis kann insbesondere durch die Zugabe von reinem Dicyclopentadien aus Vorratstank 13 eingestellt werden. Die Monomermischung enthält darüber hinaus 40% inerte Komponenten, bezogen auf die Masse der Monomermischung.

Aus der Vorlage 15 wird die Mischung zunächst mit einem Feedstrom von 10 kg/h in den Erhitzer 16 eingebracht. Im Erhitzer 16 wird die Monomermischung auf eine Temperatur von 195°C gebracht und anschließend im Rohrreaktor 20 polymerisiert. Die Temperatur der Monomermischung wird dabei im Erhitzer 16 mit einer Aufheizrate von ca. 68°C/Minute auf 195°C erhöht. Die Monomermischung befindet sich nur während des Aufheizens im Erhitzer 16 und wird direkt im Anschluss daran in den Rohrreaktor 20 überführt. Dementsprechend hat die Monomermischung eine Gesamtverweilzeit im Erhitzer 16 von etwa 2,5 Minuten. Aufgrund der kurzen Verweilzeit, die insbesondere auf einer reaktionsrelevanten Temperatur von 180°C oder höher weniger als 20 Sekunden beträgt, finden im Erhitzer 16 produktbildende Reaktionen nicht in nennenswertem Ausmaß statt. Im Rohrreaktor 20 wird die Temperatur der Monomermischung mit einer Aufheizrate von etwa 20°C/Minute auf 265°C erhöht, wobei sich durch Polymerisation der Monomermischung die Reaktionsprodukte aus der cyclischen Diolefinverbindung und den ethylenisch ungesättigten Aromaten bilden. Der Druck im Rohrreaktor 20 beträgt 13 bar. Die Verweilzeit im Rohrreaktor 20 beträgt 60 Minuten. Während des Aufwärmens und während der Polymerisation ist die Monomermischung im Wesentlichen einphasig flüssig.

Am Ausgang des Rohrreaktors 20 werden 10 kg/h dem austretenden Strom entnommen und der Monomermischung über Leitung 23 am Eingang des Rohrreaktors 20 wieder hinzugegeben. Zusätzlich werden der Monomermischung 5 kg/h Oligomere, die im späteren Prozessverlauf vom Kohlenwasserstoffharz und vom inerten Lösemittel getrennt werden, wieder beigemischt. Somit werden kontinuierlich 25 kg/h Monomermischung mit rezykliertem Reaktorproduktstrom und rezykliertem Oligomer dem Rohrreaktor 20 zugeführt.

Aus dem Rohrreaktor 20 wird nach Entnahme der 10 kg/h Reaktorproduktstrom ein Produktstrom von 15 kg/h von Kohlenwasserstoffharz, Lösemittel, Restmonomeren und Oligomeren erhalten und in den Entspannungsverdampfer 21 eingeleitet. Der Strom tritt mit einer Temperatur von 265°C und einem Druck von 13 bar in den Entspannungsverdampfer 21 ein. Im Entspannungsverdampfer 21 wird der Druck des Stroms auf 30 mbar reduziert. Dabei werden der Gehalt an Lösemittel sowie unreagiertem Monomer und Oligomer im Kohlenwasserstoffharz bis auf 0,5 Gew.-% oder weniger reduziert. Das Sumpfprodukt aus dem Entspannungsverdampfer 21, das im Wesentlichen aus Kohlenwasserstoffharz besteht, wird als Sumpfproduktstrom von 7 kg/h dem Zwischenlagertank 22 zugeführt. Über Kopf wird aus dem Entspannungsverdampfer 21 ein Dampfstrom von 8 kg/h enthaltend Lösemittel, nicht reagierte Monomere und Oligomere abgeführt. Um das Sumpfprodukt aus dem Entspannungsverdampfer 21 noch weiter aufzureinigen, kann nach dem Entspannungsverdampfer 21 ein Dünnschichtverdampfer eingesetzt werden. Über die Leitung 22' kann das noch nicht hydrierte Kohlenwasserstoffharz aus dem Zwischenlagertank 22 entnommen werden.

Der Dampfstrom aus dem Entspannungsverdampfer 21 wird in den Partialkondensator 24 geleitet, in dem als Flüssigphase die Oligomere und als Dampfphase das Lösemittel und nicht reagierte Monomere aufgetrennt werden. Die Oligomere werden über die Leitung 24' der Vorlage 15 als Oligomerstrom von 5 kg/h zugeführt. Lösemittel und nicht reagierte Monomere werden über die Leitung 24" abgeführt. Der Partialkondensator wird bei einem Druck von 30 mbar und einer Temperatur von 110°C betrieben. Hierdurch werden der Monomermischung selektiv Oligomere zurückgeführt, während nichtreaktive Substanzen weitgehend entfernt werden. Dadurch kann das Verfahren trotz Verwendung von Petroleumfraktionen ohne Anpassung des Rohstofffeeds stabil betrieben werden.

### Eigenschaften der Kohlenwasserstoffharze

In der nachfolgenden Tabelle 1 sind verschiedene Monomermischungen und die resultierenden Kohlenwasserstoffharze wiedergegeben.

**Tabelle 1: Monomermischungen und Eigenschaften der erhaltenen Kohlenwasserstoffharze**

| Nr. | Monomermischung | | Eigenschaften Kohlenwasserstoffharz | | | | | | |
|---|---|---|---|---|---|---|---|---|---|
| | CD | VA | Inden | Mn | Mw | PDI | Mz | EP | Gardner |
| 1 | 68 | 32 | 10,6 | 294 | 666 | 2,27 | 1925 | 83,3 | 14,1 |
| 2 | 70 | 30 | 9,2 | 375 | 715 | 1,91 | 1550 | 88,2 | 11,1 |
| 3 | 70 | 30 | 9,1 | 385 | 734 | 1,91 | 1658 | 87,7 | 11,5 |
| 4 | 80 | 20 | 4,4 | 388 | 784 | 2,02 | 1703 | 93,4 | 11,3 |
| 5* | 85 | 15 | 1,9 | 342 | 997 | 2,92 | 2928 | 106,8 | 9 |
| 6** | 68 | 32 | 10,2 | 276 | 805 | 2,92 | 5018 | 94 | 11,4 |

| | | | | | | | | | |
|---|---|---|---|---|---|---|---|---|---|
| Erläuterungen zu Tabelle 1: CD - Gehalt an cyclischer Diolefinverbindung in der Monomermischung in Gew.-%, bezogen auf die Masse an cyclischer Diolefinverbindung, Inden bzw. Indenderivaten und ethylenisch ungesättigten Aromaten; VA - Gehalt an ethylenisch ungesättigten Aromaten in der Monomermischung, bezogen auf die Masse an cyclischer Diolefinverbindung, Inden bzw. Indenderivaten und ethylenisch ungesättigten Aromaten; Inden - Indengehalt im Harz in Gew.-%, bezogen auf die Gesamtmasse des Harzes; Mn - zahlenmittleres Molekulargewicht in g/mol; Mw - gewichtsmittleres Molekulargewicht in g/mol; PDI - Polydispersitätsindex; Mz - zentrifugenmittleres Molekulargewicht in g/mol; EP - Erweichungspunkt nach ASTM D3461 in °C; Gardner - Gardner Farbzahl nach ISO 4630; * - Vergleichsbeispiel, in dem die Oligomere nicht der Monomermischung wieder zugeführt wurden und reines BN-200 und keine C9-Fraktion verwendet wurden; ** - Vergleichsbeispiel, in dem die Oligomere nicht der Monomermischung wieder zugeführt wurden. | | | | | | | | | |

Die Molekulargewichte Mn, Mw und Mz wurden mittels Gelpermeationschromatographie bestimmt. Als Eluent wurde THF verwendet, die Fahrweise war isokratisch bei einer Ofentemperatur von 40°C. Neben einer linearen vernetzten Polystyrol-Vorsäule wurden drei weitere lineare vernetzte Polystyrol-Säulen mit einer Porosität von je 1000 Å eingesetzt. Als Detektoren kamen ein Brechungsindex- und ein UV Detektor zum Einsatz. Zum Kalibrieren wurde ein Polystyrol-Kit (Ready Cal Kit von PSS) mit Polystyrol-Standards von 266 g/mol bis 66000 g/mol sowie ein Standard mit einer Masse von 162 g/mol verwendet.

Der Indengehalt wurde mittels Pyrolyse-Gaschromatographie mit Flammenionisationsdetektion bestimmt. Das jeweilige Kohlenwasserstoffharz wurde auf ein Platinfilament aufgebracht und in eine Pyrolysekammer, z.B. Pyrola 2000 von der Firma Porylab, eingeführt. Die Pyrolysekammer war an einen Gaschromatographen, z.B. Thermo Trace GC Ultra, mit einer 60 m Kapillarsäule (z.B. Optima 1 MS mit 0,25 µm Filmdicke von der Firma Macherey-Nagel) angeschlossen, dessen Ausgang an einen Flammenionisationsdetektor gekoppelt war. Die Pyrolyse wurde durch schnelles Aufheizen des Platinfilaments auf 600°C bewirkt. Das Platinfilament war direkt im Helium-Trägergasstrom angebracht, der die Pyrolysefragmente zur Auftrennung in den Gaschromatographen transportierte.

### Hydrierung des Kohlenwasserstoffharzes

Aus dem Zwischenlagertank 22 werden in fünf verschiedenen Hydrierungen jeweils 250 g der Kohlenwasserstoffharze 1 bis 5 entnommen und in 250 g Shellsol D40 unter Rühren gelöst. 500 g der resultierenden Lösung werden in einen Autoklav (1 L Autoklav von Parr Instruments, Reaktor der Serie 4530) eingeführt. Anschließend wird ein Nickelkatalysator auf Silica unter Rühren hinzugegeben (0,75 Gew.-% Nickelkatalysator, bezogen auf die Gesamtmasse der Harzlösung). Danach wird der Reaktor geschlossen und bei 50°C mit Stickstoff bei einem Druck von 40 bar auf Dichtigkeit geprüft. Nachdem die Dichtigkeit bestätigt ist, wird der Stickstoff durch Wasserstoff ausgetauscht und der Ausgang des Reaktors verschlossen.

Zum Reaktionsstart wird der Wasserstoffdruck auf 40 bar erhöht. Anschließend wird das Reaktionsgemisch innerhalb von 45 bis 50 Minuten über einen mit Heizöl betriebenen Wärmetauscher auf eine Reaktionstemperatur von 265 bis 270°C aufgeheizt. Nach dem Erreichen der Reaktionstemperatur wird der Wasserstoffdruck langsam auf 85 bar eingestellt. Für die Hydrierung wird das Reaktionsgemisch für weitere 3 bis 5 Stunden bei 265°C und 85 bar mit kontinuierlicher Wasserstoffnachdosierung gehalten. Die Hydrierung wird als abgeschlossen betrachtet, wenn der Wasserstoffverbrauch in dem Reaktor unter 0,5 L/h liegt.

Nach Beenden der Reaktion werden der Wasserstoffzustrom und das Heizöl abgestellt. Der Reaktor wird erneut mit Stickstoff gefüllt und innerhalb von etwa 1 Stunde auf etwa 70°C abgekühlt. Anschließend wird die Harzlösung enthaltend hydriertes Kohlenwasserstoffharz filtriert und in einen Dreihalskolben gefüllt.

Die nach dem Hydrieren erhaltene Harzlösung wird durch Strippen mit Wasserdampf destilliert. Hierfür wird die Harzlösung in dem Dreihalskolben auf 180°C geheizt und Wasserdampf mit einer Temperatur von 360°C über ein Tauchrohr durch die Harzlösung geleitet. Zusätzlich wird der Kolben über eine Kühlfalle an einer Vakuumpumpe angeschlossen, so dass die Destillation bei einem Druck von ca. 10 mbar schonend durchgeführt werden kann.

Üblicherweise ist das Lösemittel nach ca. 2 Stunden Destillation weitestgehend abgetrennt. Bevor das heiße, flüssige hydrierte Harz abgefüllt wird, wird noch 0,5 Gew.-% Antioxidans, bezogen auf die Masse des hydrierten Harzes, z.B. Irganox 1010, hinzugeben und homogenisiert.

Auf diese Weise werden aus den Kohlenwasserstoffharzen 1, 2, 3, 4, 5 und 6 die hydrierten Kohlenwasserstoffharze 1-H, 2-H, 3-H, 4-H, 5-H und 6-H erhalten.

Die vorstehend beschriebene Polymerisation kann auch diskontinuierlich betrieben werden. Die vorstehend beschriebene Hydrierung kann auch kontinuierlich betrieben werden.

Das im voranstehenden Beispiel geschilderte Verfahren kann auch im Wesentlichen unter Ausschluss von Sauerstoff durchgeführt werden.

### Eigenschaften der hydrierten Kohlenwasserstoffharze

Die hydrierten Kohlenwasserstoffharze 1-H bis 6-H sind vollhydriert. Sie weisen einen Restgehalt an olefinischen Doppelbindungen von weniger als 0,01 % und einen Restaromatengehalt von weniger als 0,1 % auf. Die hydrierten Kohlenwasserstoffharze 1-H bis 6-H haben jeweils einen VOC-Gehalt von weniger als 300 ppm. Ferner weisen die hydrierten Kohlenwasserstoffharze 1-H bis 6-H die folgenden in Tabellen 2 und 3 aufgeführten Eigenschaften auf.

Die Verträglichkeit der Harze wurde durch Ermittlung des Trübungspunkts gemäß der nachfolgend beschriebenen Methode bestimmt. Für jedes der Harze 1-H bis 6-H wurde eine Mischung mit 3 g eines Basispolymers mit 3 g des betreffenden Harzes hergestellt. Die Mischung wurde anschließend in einem Reagenzglas mit einem Innendurchmesser von 16 mm in einem Ölbad erhitzt, bis eine klare Lösung erhalten wurde, wobei maximal auf 260°C erhitzt wurde. Nach dem Erhitzen wurde das Reagenzglas aus dem Ölbad genommen und von außen sauber gewischt. Daraufhin ließ man die Mischung im Reagenzglas abkühlen, wobei die Mischung mit einem Thermometer mit roter endständiger Flüssigkeitskugel von 3 mm Durchmesser vorsichtig gerührt wurde. Die endständige rote Flüssigkeitskugel war beim Rühren in Kontakt mit dem Boden des Reagenzglases. In regelmäßigen Abständen wurde das Rühren kurz unterbrochen, die rote Flüssigkeitskugel im zylinderförmigen Bereich des Reagenzglases an die Reagenzglaswand gedrückt, die Sichtbarkeit der roten Flüssigkeitskugel entlang des Durchmessers des Reagenzglases durch die Mischung geprüft und die Temperatur der Mischung abgelesen. Der Trübungspunkt ist dann diejenige Temperatur, bei der die rote Flüssigkeitskugel entlang des Durchmessers des Reagenzglases durch die Mischung gerade nicht mehr zu erkennen ist.

Zur genaueren Ermittlung des Trübungspunkts wurde in einem ersten Durchgang der Temperaturbereich bestimmt, in dem der Trübungspunkt auftritt. Anschließend wurde der Trübungspunkt als Mittelwert von drei Messungen bestimmt.

Gut verträgliche Harze weisen einen Trübungspunkt bis 65°C auf. Verträgliche Harze weisen einen Trübungspunkt von 66°C bis 100°C auf. Weniger verträgliche Harze weisen einen Trübungspunkt von 101°C bis 150°C auf. Schlecht verträgliche Harze weisen einen Trübungspunkt von 150°C bis 200°C auf. Unverträgliche Harze weisen einen Trübungspunkt von über 200°C auf. Harze mit einem Trübungspunkt von 30°C oder weniger sind sehr gut verträglich.

Als Basispolymer für die Mischung zur Ermittlung des Trübungspunkts wurde ein Basispolymer verwendet, das typischerweise in Heißklebern zum Einsatz kommt. Es wurden also ein typischerweise in Heißklebern eingesetztes Metallocenpolyolefin oder ein typischerweise in Heißklebern eingesetztes Ethylenvinylacetat-Copolymer oder ein typischerweise in Heißklebern eingesetztes amorphes Polyalphaolefin verwendet.

Typischerweise eingesetzte Metallocenpolyolefine sind beispielsweise Affinity GA 1900 und Affinity GA 1950 von der Dow Chemical Company. Typischerweise eingesetzte Ethylenvinylacetat-Copolymere sind beispielsweise Evatane 18-500, Evatane 28-420 und Evatane 33-400 von Arkema. Bei den vorgenannten Evatane Ethylenvinylacetat-Copolymeren beschreiben die ersten beiden Ziffern den Mittelwert des Vinylacetatgehalts in Gewichtsprozent und die letzten drei Ziffern den Mittelwert des Schmelzflussindex bei 190°C und 2,16 kg nach ISO 1133 bzw. ASTM D1238. Typischerweise eingesetzte amorphe Polyalphaolefine sind beispielsweise Vestoplast 608, Vestoplast 703 und Vestoplast 750 von Evonik Industries. Die Harze werden mit ihrer jeweils aktuellen Beschaffenheit eingesetzt. Ist eines der Harze nicht mehr erhältlich, wird es durch ein anderes Harz (jeweils entsprechend mPO, EVAC, APAO) ersetzt, das stattdessen typischerweise in Heißklebern eingesetzt wird.

**Tabelle 2: Eigenschaften der hydrierten Kohlenwasserstoffharze**

| Nr. | Yellow | Mn | Mw | Mz | PDI | EP |
|---|---|---|---|---|---|---|
| 1-H | 1,6 | 408 | 777 | 1558 | 1,91 | 97,1 |
| 2-H | 0,4 | 252 | 533 | 1285 | 2,11 | 92,7 |
| 3-H | 0,6 | 258 | 540 | 1253 | 2,09 | 94,6 |
| 4-H | 1 | 361 | 680 | 1350 | 1,88 | 106 |
| 5-H* | 1,2 | 346 | 814 | 2086 | 2,35 | 111,5 |
| 6-H** | 1,2 | 380 | 773 | 1615 | 2,04 | 102,7 |

| | | | | | | |
|---|---|---|---|---|---|---|
| Erläuterungen zu Tabelle 2: Yellow - Yellowness-Index, gemessen nach der Norm ASTM D1209-05(2011); Mn - zahlenmittleres Molekulargewicht in g/mol; Mw - gewichtsmittleres Molekulargewicht in g/mol; Mz - zentrifugenmittleres Molekulargewicht in g/mol; PDI - Polydispersitätsindex; EP - Erweichungspunkt nach ASTM D3461 in °C; * und ** - hydrierte Harze der Vergleichsbeispiele, siehe auch Erläuterungen zu Tabelle 1. | | | | | | |

**Tabelle 3: Verträglichkeit**

| Nr. | Trübungspunkt [°C] | | | | | | |
|---|---|---|---|---|---|---|---|
| | Affinity GA 1900/ 1950 | Vestoplast 703 | Vestoplast 750 | Vestoplast 608 | Evatane 18-500 | Evatane 28-420 | Evatane 33-400 |
| 1-H | 30 | 30 | 30 | 30 | 30 | 137 | 205 |
| 2-H | 30 | 30 | 30 | 30 | 56 | 55 | 133 |
| 3-H | 30 | 30 | 30 | 30 | 30 | 60 | 140 |
| 4-H | 30 | 30 | 30 | 30 | 62 | 144 | 205 |
| 5-H* | 30 | 170 | 210 | 215 | 144 | 250 | 250 |
| 6-H** | 30 | 30 | 30 | 70 | 88 | 181 | 225 |

| | | | | | | | |
|---|---|---|---|---|---|---|---|
| Erläuterungen zu Tabelle 3: Die angegebenen Trübungspunkte wurden wie oben beschrieben bestimmt; * und ** - hydrierte Harze der Vergleichsbeispiele, siehe auch Erläuterungen zu Tabelle 1. | | | | | | | |

Wie aus den vorstehenden Daten folgt, ist es möglich, durch die thermische Polymerisation von cyclischen Diolefinverbindungen und einer inden- oder C₁₋₄-alkylindenhaltigen aromatischen Komponente in dem erfindungsgemäßen Verfahren Kohlenwasserstoffharze mit einem PDI von 2,27 und Gardner Farbzahlen von 14,1 oder weniger zu erhalten. Dabei konnten sogar Kohlenwasserstoffharze mit einem PDI von 1,91 und einer Gardner Farbzahl von 11,1 erhalten werden. Die vollständig hydrierten Kohlenwasserstoffharze sind mit typischerweise in Heißklebern eingesetzten Metallocenpolyolefinen und amorphen Polyalphaolefinen gut verträglich. Insbesondere zeigen die erfindungsgemäßen vollständig hydrierten Kohlenwasserstoffharze sogar gleichzeitig gute Verträglichkeiten mit typischerweise in Heißklebern eingesetzten Ethylenvinylacetat-Copolymeren.

### BEZUGSZEICHEN

- 11: Vorratstank BN-200
- 12: Vorratstank C9-Fraktion
- 13: Vorratstank reines Dicyclopentadien
- 14: Vorratstank Xylol
- 15: Vorlage
- 16: Erhitzer
- 20: Rohrreaktor
- 21: Entspannungsverdampfer
- 22: Zwischenlagertank
- 22': Entnahme
- 23: Produktrückführung
- 24: Partialkondensator
- 24': Oligomerrückführung
- 24": Abführung von Lösemittel und nicht reagiertem Monomer

## Patentansprüche

1. Kohlenwasserstoffharz erhältlich durch thermische Polymerisation einer cyclischen Diolefinkomponente enthaltend eine cyclische Diolefinverbindung mit einer Aromatenkomponente enthaltend Inden und/oder C₁₋₄-Alkylinden, wobei das Kohlenwasserstoffharz einen Polydispersitätsindex (PDI) von 1 bis kleiner 2,3 aufweist.

2. Kohlenwasserstoffharz nach Anspruch 1, **dadurch gekennzeichnet, dass** das Kohlenwasserstoffharz von der cyclischen Diolefinverbindung stammende Wiederholeinheiten und Inden- und/oder C₁₋₄-Alkylindeneinheiten enthält, und wahlweise weitere von der Aromatenkomponente stammende Einheiten enthält.

3. Kohlenwasserstoffharz nach einem der Ansprüche 1 oder 2, **dadurch gekennzeichnet, dass** das Kohlenwasserstoffharz einen Polydispersitätsindex (PDI) von 1 bis 2,1, bevorzugt von 1,5 bis 2,0, weiter bevorzugt von 1,5 bis 1,95, aufweist.

4. Kohlenwasserstoffharz nach einem der vorstehenden Ansprüche, **dadurch gekennzeichnet, dass** das Kohlenwasserstoffharz 1 bis 20 Gew.-%, bevorzugt 4 bis 20 Gew.-%, weiter bevorzugt 4 bis 16 Gew.-%, noch weiter bevorzugt 5 bis 15 Gew.-%, besonders bevorzugt 7 bis 13 Gew.-%, bezogen auf die Gesamtmasse des Kohlenwasserstoffharzes, Inden- und/oder C₁₋₄-Alkylindeneinheiten enthält.

5. Kohlenwasserstoffharz nach einem der vorstehenden Ansprüche, **dadurch gekennzeichnet, dass** das Kohlenwasserstoffharz ein Mz von 800 bis 2450 g/mol, bevorzugt von 800 bis 1800 g/mol, weiter bevorzugt von 800 bis 1750 g/mol, noch weiter bevorzugt von 800 bis 1700 g/mol, aufweist und/oder dass das Kohlenwasserstoffharz einen Erweichungspunkt, bestimmt nach der Ring und Kugel Methode gemäß Norm ASTM D3461, von 80°C bis 140°C, bevorzugt von 90°C bis 130°C, weiter bevorzugt von 100°C bis 120°C, aufweist, und/oder eine Gardner Farbzahl von 14 oder weniger, bevorzugt von 12 oder weniger, weiter bevorzugt 11 oder weniger, aufweist.

6. Kohlenwasserstoffharz nach einem der vorstehenden Ansprüche, **dadurch gekennzeichnet, dass** die cyclische Diolefinkomponente 30 Gew.-% oder mehr, bevorzugt 35 Gew.-% oder mehr, weiter bevorzugt 50 Gew.-% oder mehr, noch weiter bevorzugt 60 Gew.-% oder mehr, noch weiter bevorzugt 70 Gew.-% oder mehr, bezogen auf die Gesamtmasse der cyclischen Diolefinkomponente, der cyclischen Diolefinverbindung enthält.

7. Kohlenwasserstoffharz nach einem der vorstehenden Ansprüche, **dadurch gekennzeichnet, dass** die cyclische Diolefinverbindung ein konjugiertes Cyclodialken enthält und/oder ausgewählt ist aus der Gruppe bestehend aus Cyclopentadien, Cyclopentadienderivate wie Methylcyclopentadien, Ethylcyclopentadien, Pentamethylcyclopentadien, Ethyltetramethylcyclopentadien und Mischungen davon.

8. Kohlenwasserstoffharz nach einem der Ansprüche 1 bis 7, **dadurch gekennzeichnet, dass** das Kohlenwasserstoffharz 40 bis 85 Gew.-%, bevorzugt 45 bis 70 Gew.-%, weiter bevorzugt 45 bis 65 Gew.-% von der cyclischen Diolefinverbindung stammende Einheiten enthält, bezogen auf die Gesamtmasse des Kohlenwasserstoffharzes.

9. Kohlenwasserstoffharz nach einem der vorstehenden Ansprüche, **dadurch gekennzeichnet, dass** die Aromatenkomponente ein Aromatengemisch ist, das Inden und/oder C₁₋₄-Alkylinden und mindestens eine, insbesondere mindestens zwei, ethylenisch ungesättigte aromatische Verbindungen mit jeweils unabhängig voneinander 8 bis 15, vorzugsweise 8 bis 13, Kohlenstoffatomen enthält.

10. Kohlenwasserstoffharz nach Anspruch 8, **dadurch gekennzeichnet, dass** das Aromatengemisch ein Gemisch enthaltend 50 Gew.-% oder weniger Vinylaromaten wie Styrol, α-Methylstyrol, *o*-Vinyltoluol, *m*-Vinyltoluol und *p-*Vinyltoluol, 30 Gew.-% oder weniger Inden und 15 Gew.-% oder weniger C₁₋₄-Alkylinden ist, bezogen auf die Gesamtmasse des Gemischs, oder ein Gemisch enthaltend 60 Gew.-% oder weniger Inden und/oder C₁₋₄-Alkylinden, bezogen auf die Gesamtmasse des Gemischs, ist.

11. Kohlenwasserstoffharz nach einem der Ansprüche 9 oder 10, **dadurch gekennzeichnet, dass** das Kohlenwasserstoffharz 5 bis 25 Gew.-%, bevorzugt 10 bis 25 Gew.-%, weiter bevorzugt 15 bis 25 Gew.-% Inden- und/oder C₁₋₄-Alkylindeneinheiten und von ethylenisch ungesättigten aromatischen Verbindungen stammende Einheiten enthält, bezogen auf die Gesamtmasse des Kohlenwasserstoffharzes.

12. Verfahren zur Herstellung eines Kohlenwasserstoffharzes nach einem der Ansprüche 1 bis 11, in dem man eine Monomermischung, die eine Aromatenkomponente enthaltend Inden und/oder C₁₋₄-Alkylinden und eine cyclische Diolefinkomponente enthaltend eine cyclische Diolefinverbindung enthält, durch Erwärmen auf eine Polymerisationstemperatur von mindestens 180°C zur Polymerisation bringt, um einen Produktstrom enthaltend Kohlenwasserstoffharz zu erhalten, wobei Oligomere, die von der cyclischen Diolefinverbindung stammende Einheiten und/oder von der Aromatenkomponente stammende Einheiten enthalten, vom Produktstrom abgetrennt und der Monomermischung wieder zugeführt werden.

13. Verfahren nach Anspruch 12, **dadurch gekennzeichnet, dass** die Monomermischung während des Aufwärmens auf die Polymerisationstemperatur und während der Polymerisation im Wesentlichen einphasig flüssig ist, und/oder dass die Polymerisationstemperatur von 200°C bis 300°C, vorzugsweise von 230°C bis 300°C oder von 240°C bis 280°C oder von 250°C bis 270°C, beträgt, und/oder dass die Polymerisation bei einem Druck von 10 bar bis 25 bar, vorzugsweise von 10 bar bis 20 bar oder von 13 bar bis 18 bar, durchgeführt wird, und/oder dass die Polymerisation kontinuierlich in einem Rohrreaktor durchgeführt wird.

14. Verfahren nach einem der Ansprüche 12 oder 13, **dadurch gekennzeichnet, dass** die cyclische Diolefinkomponente gemäß Anspruch 6 definiert ist und/oder die cyclische Diolefinverbindung gemäß Anspruch 7 definiert ist und/oder die Aromatenkomponente gemäß Anspruch 9 oder 10 definiert ist.

15. Verfahren nach einem der Ansprüche 12 bis 14, **dadurch gekennzeichnet, dass** die cyclische Diolefinverbindung gemäß Anspruch 7 definiert ist und die Aromatenkomponente gemäß Anspruch 9 oder 10 definiert ist und die Monomermischung 50 bis 95 Gew.-%, vorzugsweise 60 bis 95 Gew.-%, oder 65 bis 90 Gew.-% oder 65 bis 85 Gew.-% oder 65 bis 80 Gew.-% der cyclischen Diolefinverbindung, bezogen auf die Gesamtmasse der cyclischen Diolefinverbindung, Inden und/oder C₁₋₄-Alkylinden und ethylenisch ungesättigten aromatischen Verbindungen, enthält.

16. Verfahren nach einem der Ansprüche 12 bis 15, **dadurch gekennzeichnet, dass** die cyclische Diolefinverbindung gemäß Anspruch 7 definiert ist und die Aromatenkomponente gemäß Anspruch 9 oder 10 definiert ist und die Monomermischung 5 bis 40 Gew.-%, vorzugsweise 10 bis 35 Gew.-% oder 15 bis 35 Gew.-% oder 25 bis 35 Gew.-% an Inden und/oder C₁₋₄-Alkylinden und ethylenisch ungesättigten aromatischen Verbindungen, bezogen auf die Gesamtmasse der cyclischen Diolefinverbindung, Inden und/oder C₁₋₄-Alkylinden und ethylenisch ungesättigten aromatischen Verbindungen, enthält.

17. Verfahren nach einem der Ansprüche 12 bis 16, **dadurch gekennzeichnet, dass** die Monomermischung ein nicht polymerisierbares Lösemittel, vorzugsweise enthaltend ein- oder mehrfach, insbesondere ein- oder zweifach, Alkyl-substituierte aromatische Verbindungen mit 7 bis 10 Kohlenstoffatomen, beispielsweise *o*-Xylol, *m*-Xylol, *p*-Xylol und/oder Ethylbenzol, umfasst.

18. Verfahren nach einem der Ansprüche 12 bis 17, **dadurch gekennzeichnet, dass** die Oligomere bei einem Absolutdruck von 100 mbar oder weniger, insbesondere 50mbar oder weniger, bevorzugt 30 mbar, und bei einer Temperatur von 80°C oder mehr, bevorzugt von 80°C bis 120°C, weiter bevorzugt von 90°C bis 115°C, noch weiter bevorzugt von 100°C bis 110°C, sieden, und/oder ein Molekulargewicht von 100 bis 600 g/mol, vorzugsweise von 130 bis 600 g/mol oder von 150 bis 600 g/mol, aufweisen.

19. Verfahren nach einem der Ansprüche 17 oder 18, **dadurch gekennzeichnet, dass** die Oligomere und das optionale nicht polymerisierbare Lösemittel nach der Polymerisation teilweise, bevorzugt vollständig durch absatzweise oder vorzugsweise kontinuierliche Verdampfung aus dem Produktstrom entfernt werden und/oder die Oligomere nach der Verdampfung absatzweise oder vorzugsweise kontinuierlich durch vollständige oder bevorzugt partielle Kondensation vom nicht polymerisierbaren Lösemittel teilweise oder bevorzugt vollständig getrennt werden und/oder nach der Kondensation absatzweise oder vorzugsweise kontinuierlich der Monomermischung für eine weitere Polymerisation wieder zugeführt werden.

20. Verfahren nach einem der Ansprüche 12 bis 19, **dadurch gekennzeichnet, dass** das Kohlenwasserstoffharz in einem anschließenden Hydrierungsschritt teilweise oder vollständig hydriert wird, um ein hydriertes Kohlenwasserstoffharz zu erhalten.

21. Verfahren nach Anspruch 20, **dadurch gekennzeichnet, dass** der Hydrierungsschritt in Gegenwart eines Lösemittels, vorzugsweise eines aliphatischen Lösemittels oder einem Gemisch aus gesättigten, bei Raumtemperatur flüssigen Kohlenwasserstoffen, und/oder in Gegenwart eines Katalysators, insbesondere eines Nickelkatalysators, durchgeführt wird.

22. Verfahren nach einem der Ansprüche 20 oder 21, **dadurch gekennzeichnet, dass** der Hydrierungsschritt bei einem Druck von mehr als 60 bar, insbesondere von 65 bis 105 bar oder von 65 bis 100 bar oder von 70 bis 95 bar, und/oder bei einer Temperatur von 240°C oder höher, insbesondere von 240°C bis 300°C oder von 250°C bis 280°C, durchgeführt wird.

23. Hydriertes Kohlenwasserstoffharz erhältlich durch Hydrieren eines Kohlenwasserstoffharzes nach einem der Ansprüche 1 bis 11 und/oder durch ein Verfahren gemäß einem der Ansprüche 20 bis 22.

24. Hydriertes Kohlenwasserstoffharz nach Anspruch 20, **dadurch gekennzeichnet, dass** in dem hydrierten Kohlenwasserstoffharz die olefinischen Doppelbindungen zu mindestens 70%, vorzugsweise mindestens 90% oder mindestens 95% oder mindestens 99%, und/oder die aromatischen Doppelbindungen zu mindestens 70%, vorzugsweise mindestens 90% oder mindestens 95% oder mindestens 99% hydriert vorliegen.

25. Hydriertes Kohlenwasserstoffharz nach einem der Ansprüche 23 oder 24,
**dadurch gekennzeichnet, dass** das hydrierte Kohlenwasserstoffharz ein Mz von 800 bis 2500 g/mol, vorzugsweise 800 bis 1800 g/mol, bevorzugt 800 bis 1600 g/mol, weiter bevorzugt 800 bis 1400 g/mol, und/oder einen Erweichungspunkt, bestimmt nach der Ring und Kugel Methode gemäß Norm ASTM D3461, von 80°C bis 140°C, bevorzugt von 90°C bis 130°C, weiter bevorzugt von 90°C bis 125°C, und/oder eine Hazen-Farbzahl von 40 oder weniger, bevorzugt von 25 oder weniger, und/oder einen Yellownessindex von 3 oder weniger, bevorzugt von 1 oder weniger, aufweist.

26. Zusammensetzung enthaltend
- ein Kohlenwasserstoffharz nach einem der Ansprüche 1 bis 11 oder ein hydriertes Kohlenwasserstoffharz nach einem der Ansprüche 23 bis 25, und
- ein Klebstoffpolymer, beispielsweise ein Metallocenpolyolefin oder ein Ethylenvinylacetat-Copolymer oder ein amorphes Polyalphaolefin oder ein Styrol-Blockcopolymer.

27. Verwendung eines Kohlenwasserstoffharzes nach einem der Ansprüche 1 bis 11 oder eines hydrierten Kohlenwasserstoffharzes nach einem der Ansprüche 23 bis 25 als Klebrigmacher oder Tackifier in Heißklebern, insbesondere in Heißklebern basierend auf Metallocenpolyolefin, Ethylenvinylacetat-Copolymer, amorphen Polyalphaolefinen oder Styrol-Block-Copolymeren, und/oder in lösemittelhaltigen Klebstoffen, insbesondere in lösemittelhaltigen Styrol-BlockCopolymer Klebstoffen.

28. Verwendung eines Kohlenwasserstoffharzes nach einem der Ansprüche 1 bis 11 als Modifikationsmittel in Kautschukprodukten, insbesondere zur Verbesserung der mechanischen und dynamischen Eigenschaften in Kautschukprodukten, in Bitumen, insbesondere als Additiv und/oder als Hydrophobiermittel in Bitumen, insbesondere für Asphalt, oder als Modifizierungs- und/oder Hydrophobierungsmittel in Druckfarben.

29. Verwendung eines hydrierten Kohlenwasserstoffharzes nach einem der Ansprüche 23 bis 25 als Additiv in Lack, in Plastik, insbesondere als Modifikationsmittel in Plastik, in Gummi, in Bitumen, insbesondere als Hydrophobiermittel in Bitumen, beispielsweise für Dachbahnen, in Polypropylenfolien, insbesondere als Modifizierungs- und/oder Hydrophobiermittel in Polypropylenfolien, insbesondere BOPP-Folien, in Kosmetika oder als Klebrigmacher in Kleberzusammensetzungen, insbesondere für Applikationen in der Hygieneartikelindustrie sowie für den Einsatz in Nahrungsmittelverpackungen.
